# EUROPEAN PATENT SPECIFICATION

(11) **EP 0 736 208 B1**
(45) Date of publication and mention of the grant of the patent: **02.12.1998**
(21) Application number: 95904485.0
(22) Date of filing: 16.12.1994
(51) Int. Cl.: G06K 17/00

(54) **PERIPHERAL UNIT FOR PROCESSING DOCUMENTS**
PERIPHERIEGERAET ZUM VERARBEITEN VON DOKUMENTEN
UNITE PERIPHERIQUE DE TRAITEMENT DE DOCUMENTS

(30) Priority: 23.12.1993 IT TO930996
(43) Date of publication of application: 09.10.1996
(73) Proprietor: Ing. C. Olivetti & C., S.p.A., 10015 Ivrea (IT)
(72) Inventor: CRESTI, Marcello, I-10019 Strambino (IT)
(74) Representative: Robson, Aidan John
(86) International application number: EP9404178
(87) International publication number: WO9517735

(56) References cited:
- EP-A- 0 276 626
- EP-A- 0 291 473
- EP-A- 0 396 052
- WO-A-83/02348
- WO-A-88/02734
- DE-A- 1 950 619
- DE-A- 3 511 386
- DE-A- 3 704 059
- FR-A- 2 379 860
- US-A- 4 617 457
- US-A- 4 678 896

## Description

### FIELD OF THE INVENTION

The present invention relates to a peripheral unit for processing documents, preferably though not exclusively, in a banking environment, as well as in postal or other administrations.

### BACKGROUND OF THE INVENTION

Documents processed by banks, post offices and administrations with a high form content, include pre-printed items, consisting of one or several copies, sheets of differing formats and booklets of differing format and thicknesses. A considerable part of the activities of these administrations also relates to the processing of cheques, which, owing to their dimensions and peculiarities, are filled in and/or nullified by specific cheque-processing equipment, quite different from that used for other documents. Furthermore, the operations jointly involving documents and cheques are normally carried out by a counter clerk working in a confined space. Failing the possibility of installing several items of equipment in more convenient manner close to a counter, the clerk is obliged to leave the counter repeatedly for the purpose of access to the peripherals, as required, from time to time.

A technical problem concerning the invention is to design a document-processing peripheral unit taking up minimal space and able to process both generic documents and cheques.

In the relevant administrations and particularly in a banking environment, operations with documents and cheques involve widely random types and procedures subject to development in time. Peripheral accessories are thus required, sometimes at different stages, such as image- and magnetic strip- readers, magnetic character printers and other document processing units, frequently difficult to integrate with the peripheral units already installed.

Another technical problem facing the invention is to achieve a peripheral unit able to accept, without extensive complications, other accessories for the processing of documents and cheques.

Data relating to the processed documents may also be drawn from document images, scanned by means of suitable readers and converted into digital form. The data is then fed to a computer for subsequent preparation and memorising. The support on which appear the images to be scanned are of different nature and this calls for the use of equipment designed for differing types of support.

Another problem is the construction of a peripheral unit with a document reader-scanner, able to read differing types of support and which can be excluded, to avoid any influence on the peripheral operation, when document reading is not required.

A possible solution to the above mentioned problems is known from German Patent No. DE-A-3 511 386 published on October 10th, 1986, in which a cash-register printer has exchangeable printing heads and is constructed from a number of separate subassemblies in a way which enables each subassembly to be removed and replaced; in particular the guide and conveying means and the printing abutement are combined to form an exchangeable subassembly in the form of a top attachment that can be placed on the printer casing.

In European Patent Application No. EP-A-0 276 626 published on March 8th, 1988, a multi-function printer for a plurality of different printing objects such as savings booklets, cheques, passports, etc., is disclosed having a base frame on which modular building blocks such as optical character-recognition device, magnetic-strip processing, journal printer, or optical marking searcher can be easily mounted and demounted.

However, the problem of a document processing peripheral unit taking up minimal space and having great versatility being able to process both generic documents and cheques, is not completely solved.

### SUMMARY OF THE INVENTION

The technical problems described above are solved by means of the peripheral unit of the invention as defined in claims 1 and 10. According to a first aspect, the peripheral unit comprises a base unit dedicated to document processing, pre-set for integration with a cheque unit substantially on a same footprint area, and in which the cheque unit uses functional parts of the base unit.

According to a second aspect, the peripheral unit comprises a base unit with document-guide means defining a specific document path. It comprises a cheque unit connected with the base unit and having cheque-guide means defining a specific cheque path used during the processing of cheques. Connecting means are provided, actuated to selectively connect the cheque-guide means with the document-guide means and for transferring cheques from the cheque unit to the base unit and vice-versa.

According to a third aspect, the peripheral unit comprises a base unit with a document reader-scanner unit, document-guide means to bring documents before the reader-head along a document path and document-positioning means able to modify the relative distance between document and reader, from a rest position in which the document moves at a variable distance from the reader, into a reading position in which the document is close to the reader and maintains a stable distance from it to enable reading.

These and other aspects of the present invention are defined with more precision in the appended claims to which reference should now be made.

### BRIEF DESCRIPTION OF THE DRAWINGS

These and other features of the present invention are more clearly discerned from the following description of a preferred embodiment with reference to the appended drawings, wherein:
Figure 1 is a perspective view of a peripheral unit;
Figure 2 is a perspective view of a peripheral unit embodying the invention, in a medium configuration;
Figure 3 is a perspective view of a peripheral unit embodying the invention, in its maximum configuration;
Figure 4 is a part longitudinal and sectioned view of a number of items of the peripheral in Figure 1;
Figure 4a is an enlarged scale detail of Figure 5;
Figure 5 is a part longitudinal and sectioned view of other items of the peripheral in Figure 1;
Figure 5a is an enlarged scale plan view of a detail of Figure 5;
Figure 6 is a part plan view of the peripheral in Figure 1;
Figure 7 is an enlarged scale part longitudinal view of a number of items in Figure 6;
Figure 7a is a plan view of a detail of Figure 7;
Figure 8 is a part longitudinal view of the items in Figure 7, in the working position;
Figure 8a is an enlarged scale sectional view of a number of details in Figure 8;
Figure 9 is an enlarged scale part longitudinal view of other items in Figure 6;
Figure 10 is a part longitudinal and sectioned view of other items of part of the peripheral unit in Figure 2;
Figure 11 is an enlarged scale part longitudinal and sectioned view of a number of items in Figure 10;
Figure 11a is an enlarged scale part plan view of a number of items in Figure 10;
Figure 11b is an front view of a number of items in Figure 11;
Figure 12 is an enlarged scale view of a number of items in Figure 11;
Figure 12a is an enlarged scale view of other items in Figure 11;
Figure 13 is an enlarged item in Figures 2 and 10;
Figure 13a is another view of the item in Figure 13;
Figure 14 is a different scale part longitudinal schematic view of the peripheral unit in Figure 3;
Figure 15 is a part plan view of other items of a number of items in Figure 14;
Figure 16 is a different scale part longitudinal and sectioned view of a number of items in the peripheral unit in Figure 3;
Figure 16a is a part longitudinal and sectioned view of a number of details in Figure 16, in the working position;
Figure 17a is a different scale part longitudinal and sectioned view of a number of details in Figure 3;
Figure 18 is a perspective part view of part of the peripheral unit in Figure 3;
Figure 19 is an opened configuration part longitudinal and schematic view of the peripheral unit in Figure 3;
Figure 20 is a connections wiring diagram of the peripheral unit in Figure 3;
Figure 21 is a block electrical diagram relating to an operational mode of the peripheral unit embodying the invention.

### GENERAL DESCRIPTION

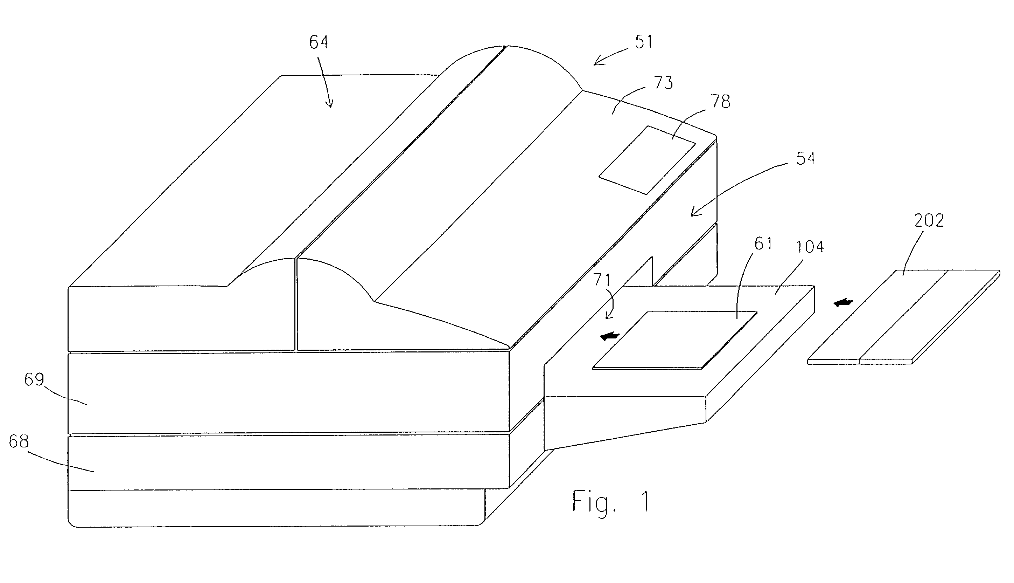

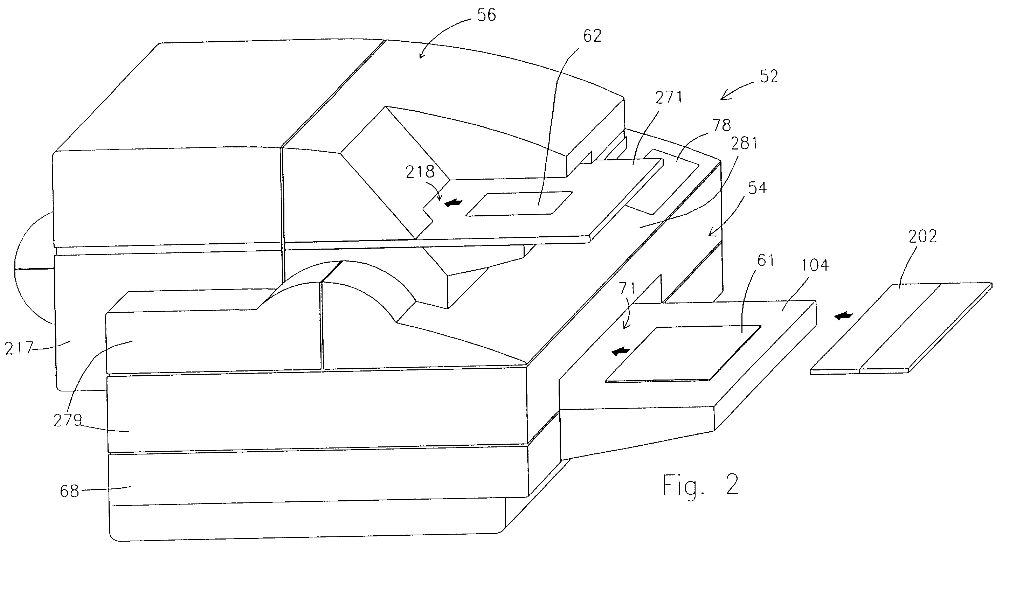

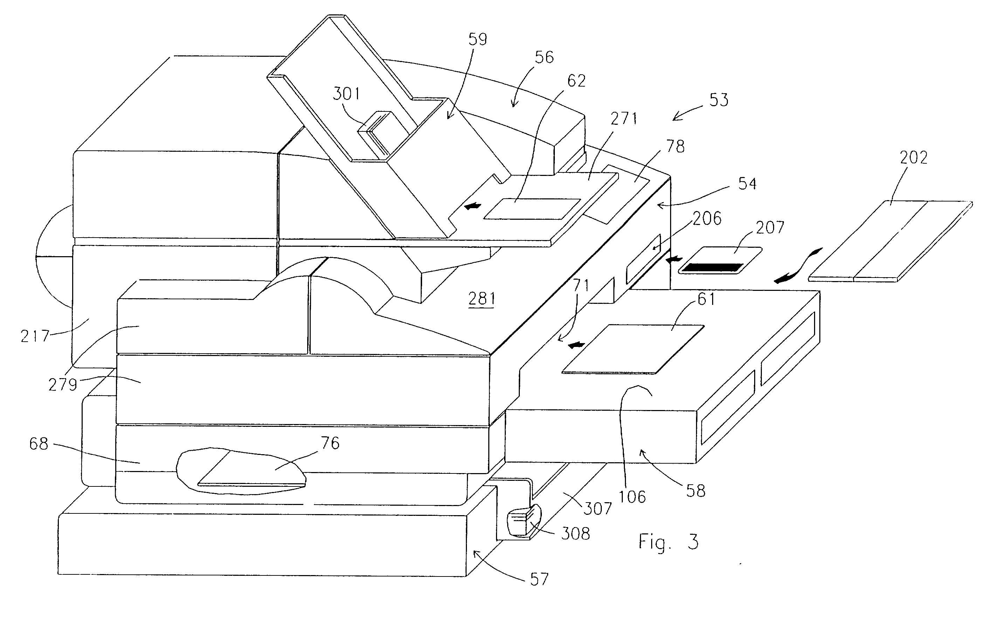

Referring to Figures 1-3, the peripheral unit is shown in a minimum configuration 51, a medium configuration 52, and a maximum configuration 53. In the minimum configuration, the unit 51 simply consists of a base unit 54. The medium configuration 52, includes in addition to the base unit 54 a cheque unit 56, and, in addition to the units 54 and 56, the maximum configuration 53 includes a document feeder 57, a document collector 58 and optionally a cheque assembler 59.

The base unit 54 is designed to process a generically defined document or documents 61. The cheque unit 56 can be mounted on the structure of the base unit 54 and is designed for specific processing of a generically defined cheque or cheques 62. Various other configurations, drawn from the unit 54 and partially from the unit 53, are obviously possible.

### BASE UNIT

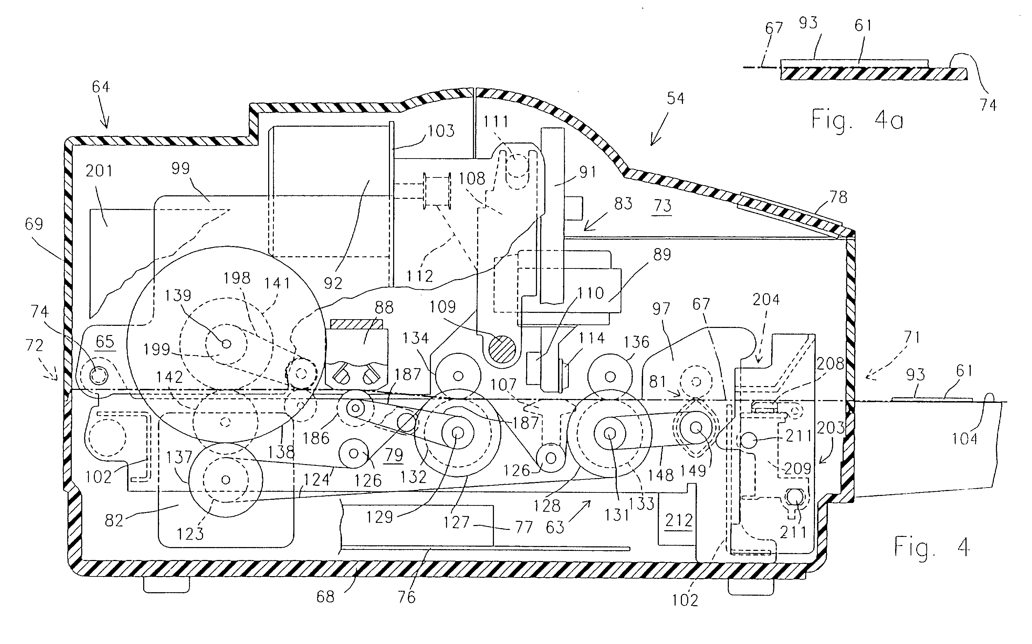

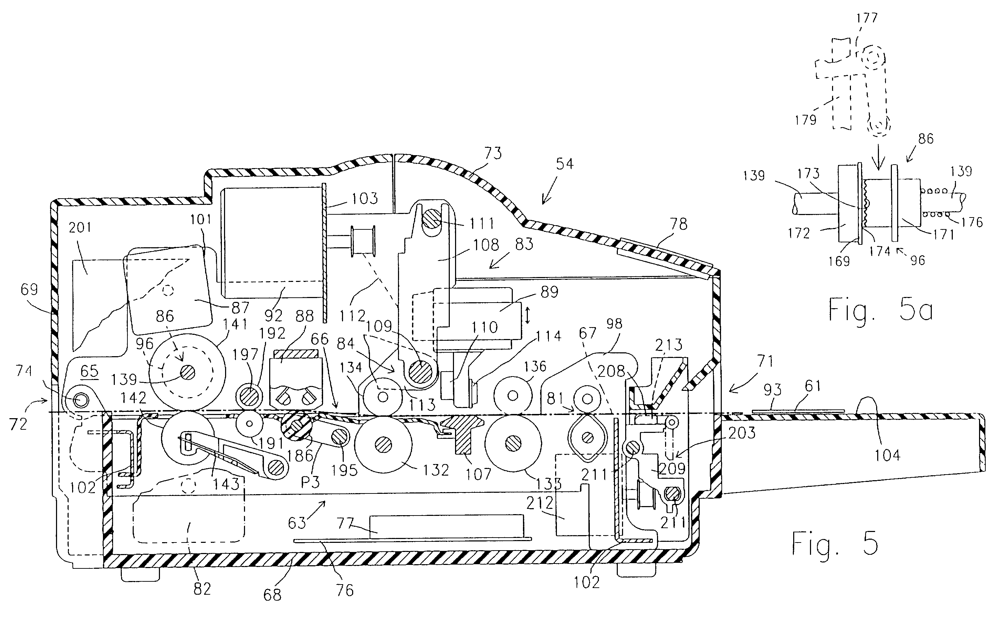

The base unit 54 (Figures 4 and 5) comprises a fixed structure 63, a housing 64 and document-guide means 66 to define an horizontal feed path 67 for the document 61. The housing 64 comprises a lower half-shell 68 and an upper half-shell 69. The upper half-shell 69 has a front aperture 71 and a rear aperture 72 at the uttermost ends of the feed path 67. The upper half-shell 69 has a removable front part 73 allowing access to the internal parts of the base unit 54. The apertures 71 and 72 are designed to allow documents 61 to pass through in both directions, and in particular during their introduction and their exit into and from the base unit 54.

The upper part of the base unit 54 coinciding with the upper half-shell 69, comprises a mobile structure 65 hinged by way of a hinge 74 on the fixed structure 63, to allow access to the operator to the path 67. The lower part houses an electronic control unit 76 and a power supply 77. A console 78 is secured to a front zone of the housing 64.

The fixed structure 63 encloses a document-movement mechanism 79 to move the document 61 along the path 67, an alignment arrangement 81 to align the documents 61 against fixed reference points, and a step-motor 82 driving the mechanism 79 and the arrangement 81.

The mobile structure 65 houses a printing unit 83, a checking arrangement 84, a presetting assembly 86 for the cheque unit 56, a drive step-motor 87, and optionally a document reader-scanner 88. The printing unit 83 has an impact type print-head 89, a removable ribbon cartridge 91 and a drive-motor 92 driving the print-head 89, accessible after removal of a front part 73 of the housing 64.

The checking arrangement 84 checks the thickness of the document 61 inserted into the unit 54, to position the print-head 89 at a preset distance from a printing area 93 on the document 61 and the scanner-reader 88 is ready to scan-read documents inserted into the unit 54. The motor 87, by means of a dual face service-cam 94, drives the checking arrangement 84 and presets operational conditions for the alignment arrangement 81 and for the reader 88.

The presetting assembly 86 (Figure 5a) comprises a coupling 96 connected with the motor 82. This can be coupled with complementary parts of the cheque unit 56, to drive the cheque unit 56 by way of the motor 82 and for the functional integration of the unit 56 with the base unit 54.

The structures 63 and 65 each comprise two side-walls respectively 97, 98 and 99, 101, each connected by cross-piece members 102 and 103. A support surface 104 for the document 61 is removably located on the housing 64 in line with the aperture 71. As an alternative to the support surface 104, the unit 54 may utilise the document collector 58, as shown with reference to the configuration 53. The collector 58 may be secured to the front part of the housing 64 and has an upper surface 106 in line with aperture 71, having the same support function as the surface 104. To insert it into the base unit 54, the document 61 is first placed on the surface 104 or 106, and then pushed manually into the front aperture 71 to be processed by the unit 54.

By means of the ribbon in the cartridge 91, the printing unit 83 is able to print symbols, characters and graphics on the printing area 93 of the document 61. This includes a back-up cross-piece 107, also part of the guide means 66, on which the document 61 is supported when moving. The cross-piece 107 is secured at the ends of the side-walls 97 and 98 of the structure 63. The print-head 89 moves transversely to the feed movement of the document 61, parallel with the cross-piece 107 and, during printing operation, the document 61 is stationary with respect to the cross-piece 107.

The movements of the print-head 89, as well as the feed movement of the document 61 along the path 67, are controlled by the control unit 76. The print-head 89 is preferably of the pin type, and thereby adapted to printing both single-sheet and multiple-copies documents. The print-head 89 and the cartridge 91 are mounted on a carriage 108 sliding on guide-rods 109 and 111, located parallel with the cross-piece 107 and accessible after removal of the part 73 of the housing. The motor 92 is secured to the cross-piece 103 of the structure 65 and movement of the carriage 108 is achieved by means of a known type of kinetic link, diagrammatically represented by the broken and dotted line, for instance by means of a pinion on motor 92 and a belt connected to the carriage.

A sheet-edge sensor 110 is secured to the print-head 89 facing the cross-piece 107. When the document 61, passing along the cross-piece 107 or in stationary position, has one edge beneath the sensor 110, the sensor 110 emits a transition signal which is sent to the control unit 76.

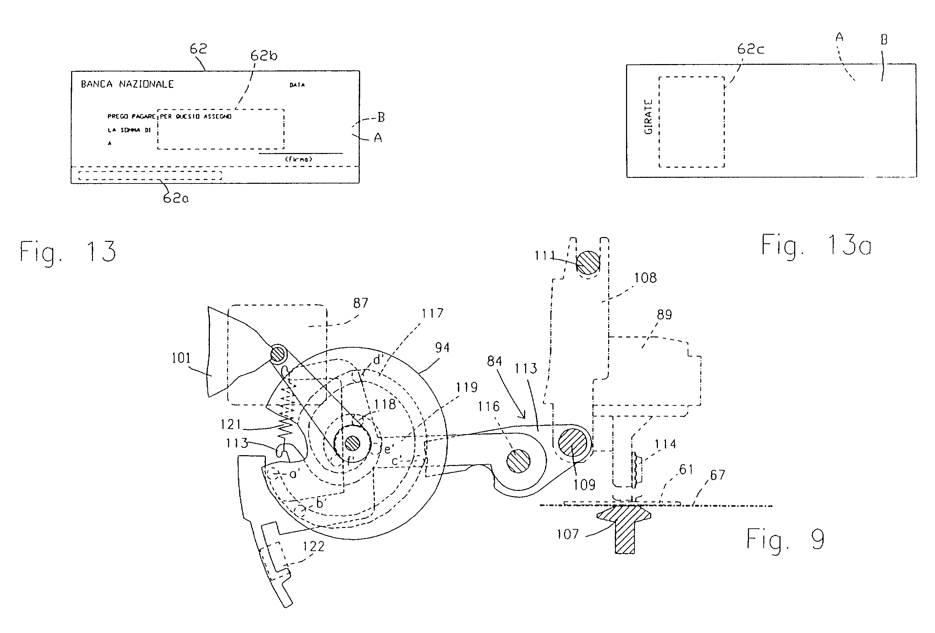

The guide-rod 111 is fixed, whereas the rod 109 is mobile and forms the cross-piece of a rocker-framework 113. The framework 113 is shown in Figure 9 and forms part of the checking arrangement 84, that will be better described further on. When at rest, the print head 89 is held in a raised position in relation to the path 67, unsuitable for printing, but allowing free movement of the document 61 beneath the print-head 89.

The checking arrangement 84 is of known type and comprises a checking roller 114, rotatably connected to the print-head 89 and able to be stopped by the back-up cross-piece 107.

The framework 113 rocks on a shaft 116 (Figure 9). To drive the arrangement 84, the cam 94 swivels on the side-wall 101 of the mobile structure 65 and has on a first face a spiral-shaped print-head control track 117, with which engages a pin 118 of a cam-follower lever 119 (Figure 9), this also being hinged from the shaft 116. The framework 113 is connected by flexible coupling with the lever 119 by means of a tension spring 121.

In the rest position, the pin 118 engages in a minimal lift zone of the track 117 close to a limit stop. In response to anti-clockwise rotation of the cam 94, the track 117, by way of the cam-follower lever 119 and the framework 113, lowers the carriage 108 until the roller 114 contacts the document 61 located on the cross-piece 107, or directly contacts the said cross-piece 107. The subsequent rotation of the cam 94 causes relative rotation between lever the 119 and the framework 113, subject to flexible yield of the spring 121.

The roller 114 is intended to be in the previously described contact position, when the pin 118 on the lever 119 engages with a part of the track 117 extending approximately between positions "c" and "b" and situated on a peripheral part of the track 117 close to a maximum lift zone.

Relative rotation between the lever 119 and the framework 113 is promptly sensed by a detector arrangement 122, sending a matching stop-signal to the control unit 76.

In an initialisation phase, the print-head 89 stops directly against the cross-piece 107. The control unit 76 then responds to the signal from the arrangement 122, to stop the motor 87 and memorise the number of steps corresponding to the rotation of the motor 87 from maximum lift to contact positions.

When operative in the checking phase, the control unit 76 triggers shaft rotation of the motor 87 until the roller 114 stops on the surface 93 of the document 61 and the stop-signal is emitted by the detector arrangement 122. The control unit 76 stops the motor 87, associates the steps made by the motor 87 with those memorised during initialisation, then rotates the shaft of the motor 87 in the reverse direction, for a suitable number of reference steps, to lift the print-head 89, and up to a reference level ensuring optimum printing of the document 61, as described in European Patent application N°448 257 in the name of the Applicant.

The movement mechanism 79 is actuated by a motor pinion 123 keyed on the shaft of the motor 82, by way of a toothed belt 124, and comprising a jockey rollers 126 and pulleys 127 and 128 meshing with the belt 124. The pulleys 127 and 128 are keyed respectively on the ends of a shafts 129 and 131 located transversely to the base unit 54 and perpendicularly to the path 67. The mechanism 79 finally comprises a set of rollers 132 and 133 respectively keyed on the shafts 129 and 131 and a set of corresponding pressure counter-rollers 134 and 136.

The rollers 132 and 133 are tangent above the path 67 to support and move forward the documents 61, acting for the purpose together with the counter-rollers 134 and 136, located in opposing directions to the path 67. The pairs formed by the rollers 132 and 133 with the counter-rollers 134 and 136 are designed to deal in optimum manner with various formats of the documents 61, as well as the cheques 62 coming from the cheque-unit 56, should that unit be fitted to the unit 54. The present version provides for 5 pairs of rollers and counter-rollers 132-134 and 133-136, for each shaft 129 and 131 respectively.

The counter-rollers 134 and 136 revolve independently on corresponding flexibly yielding supports linked in a known manner respectively in relation to the mobile structure 65 and to the fixed structure 63. When the structure 65 is in the operational position, i.e. is closed against the structure 63, the counter-rollers 134 are thus able to adapt flexibly to the documents 61, and in particular to pass-books of widely differing thicknesses and moved along the path 67.

The shafts 129 and 131 are able to swivel on the side walls 97 and 98 and are arranged parallel and adjacent to both sides af the back-up cross-member 107. A gear 137 is also keyed on the motor 82 shaft, in engagement with a gear 138, keyed on a shaft 139, which swivels on the side walls 99, 101 of the mobile structure 65. Finally the shaft 139 bears a set of transport rollers 141 tangent to and above the path 67.

When the structure 65 is closed on the structure 63, the rollers 141 operate in conjunction with corresponding counter-rollers 142 and make them rotate. The counter-rollers 142 are mounted independently to revolve, beneath the path 67 and on supports secured to the structure 63 by way of flexible fittings consisting of a needle spring 143. When the structure 65 closes on the structure 63, the pairs of rollers and counter-rollers 141-142 form pressure units, which are able to grip the document 61 and take it forward along the path 67 while adapting simultaneously to its thickness. When the structure 65 is open in relation to the structure 63, the pair of gears 137 and 138 is parted, thus separating the pair of rollers and counter-rollers 141-142 and 132-134, whereas the pair 133-136 is not split.

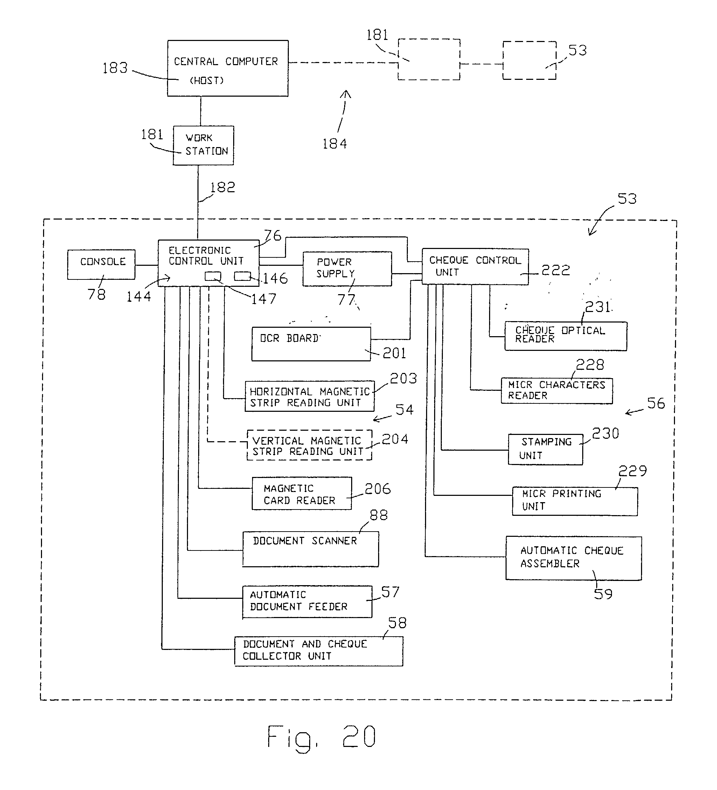

The electronic control unit 76 comprises a character generators 144 of the known type, to print one or several lines on the document 61 by way of the print-head 89 (Figure 20) , and furthermore it comprises programs resident in an EPROM type memory 146, controlling the main motor 82 and the movement mechanism 79. Said programs control the advancement of the document 61 along a normal advancing direction from the front aperture 71 to the rear aperture 72, during the spacing advancement from one line of printing to the next one. A first standard printing mode is associated with said normal direction, wherein the line of characters printed on the document 61 starts from the left lateral edge progressing towards the right edge of the document 61, looking at the document 61 from the side of the front aperture 71. The unit 76 also comprises a specialised circuit 147 (Figure 20), of the type known as ASIC, also designed for a second reverse printing mode, wherein the motor 82 advances the document during the line spacing in the direction going from the rear aperture 72 to the front aperture 71. In said second reverse mode the line of printed characters starts from the right lateral edge of the document 61 progressing towards the left edge, looking at the document 61 from the side of the aperture 71.

The alignment arrangement 81 is designed to position the document 61, randomly placed in the structure 63, according to a predetermined position in relation to the structure and aligned with reference points parallel and transverse to the path 67. This is activated immediately after the document 61 is placed on the support surface 104 and pushed into the aperture 71. It is only after alignment that the documents 61 start moving along the path 67.

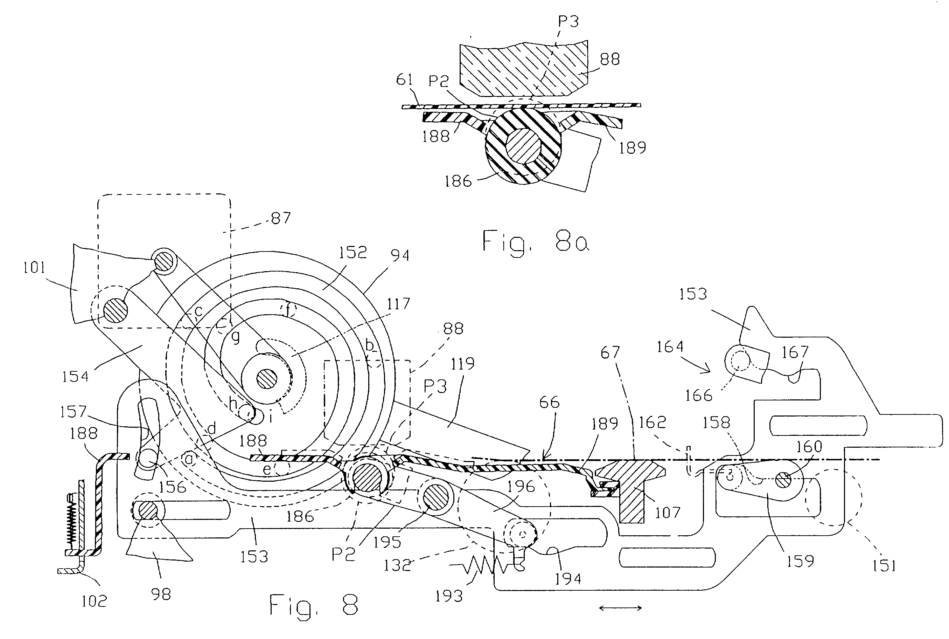

The step-motor 82 drives the arrangement 81 by means of known types of belt 148, motor shaft 149 and coupling 151 which only engages during the document alignment phase. The coupling 151 is actuated by the cam 94 by means of a track 152 and a kinetic chain comprising a cursor 153 (Figures 8 and 9) supported to slide on the fixed structure 63 and a cam-follower lever 154 supported by the mobile structure 65.

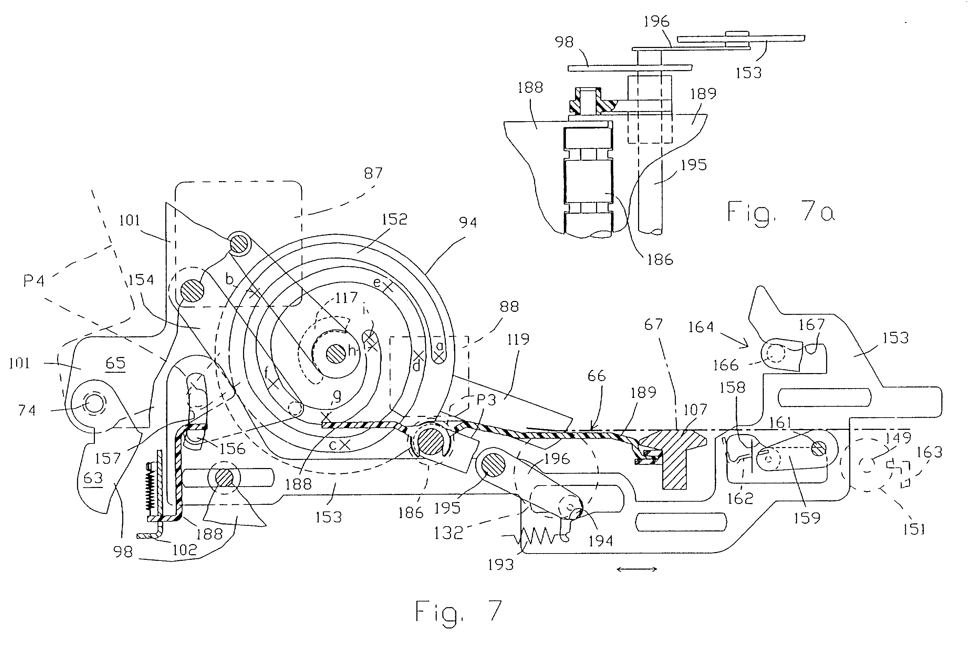

The cam-follower lever 154 is linked to the cursor 153 by a pin 156 and a slot 157 in the cursor 153. The slot 157 is arched and in the rest position its centre of curvature lies essentially on the centre-line of the hinge 74. Rocking of the mobile structure 65 in relation to the fixed structure 63, to bring it in position P4 shown by the dotted line in Figure 7, gives rise to a reciprocal movement of the lever 154 and the cursor 153. This causes only the sliding of the pin 156 in relation to the slot 157, without interrupting the kinetic chain and without sensible movement of the cursor 153.

The cursor 153 has a cam profile 158. A crank 159 keyed onto a transverse shaft 161, engages with the profile 158 to allow rocking from a working upper position to a rest lower position. The shaft 161 supports alignment cross-members 162 and an arm not shown in the drawing, connected to a lever 163. The lever 163 is hinged from the cross-piece member 102 of the structure 63 on the base unit 54 and actuates the coupling 151 to engage or disengage it, connecting the arrangement 81 with the motor 82.

By way of the track 152 on the cam 94, the drive-motor 87 also controls the pressure to be exerted on the counter-rollers 136 to match the thickness of the documents 61 passing along the path 67. For that purpose, the counter-rollers 136 can press against the corresponding rollers 133 with two different loadings, light and heavy respectively, and can also be detached from the rollers 133 so as to remove any loading. This is controlled by way of the mechanism 164, as described in European Patent No. 448 257 in the name of the Applicant, which briefly comprises a roller 166 able to move so as to engage with a profile 167 on the cursor 153 and to stop in three different positions.

These positions of the roller 166 in relation to the profile 167, are obtained by corresponding rotation of the cam 94 and consequent movements of the cursor 153. In such positions, the roller 166 controls a lever arrangement which in the first case, representing no load, raises the counter-rollers 136 in relation to the rollers 132; and, in a second and a third case in which the counter-rollers 136 are in contact with the rollers 133, causes the variation, according to known conditions, of helical springs compression load reacting on the supports of the counter-rollers 136, between a high and a low level of loading. Clearly the light and heavy loading forces also correspond with those dealt with by the pairs of rollers 133-136. More precisely, the heavy load is intended to advance pass-books, whereas the light load is intended for the other types of the documents 61.

In particular, the track 152 has a segment h-i at a minimal radial distance, two medium distance segments g-f and e-d and a maximum distance segment b-a, all practically circular, connected by increasing radial distance segments. Figure 7 shows the rest position, in which the follower pin 156 on the lever 154 engages in a position on segment g-f which corresponds with the rest position for the cursor 153. In that setting, the crank 159 is in the lower position, the alignement cross-members 162 are lowered, out of the path 67, and the lever 163 keeps the coupling 151 open.

Figure 8 shows the working position, activated by introduction of the document 61, in which the track 152 is engaged with the follower pin 156 on the lever 154 in position "h", next to position "i" at the bottom of the track 152 of the same cam 94. The track 152 is also spiral-shaped and is located on a face of the cam 94 opposite the one in which is located the track 117. The track 152 extends to various radii of the cam 94, for engagement by the follower pin 156 on the lever 154. The crank 159 is in its upper position and in that setting the alignement cross-membres 162 are lifted completely to projecting out in relation to path 67 to align the documents 61. The coupling 151 is closed by the lever 163, and in consequence the alignment arrangement 81 is connected with the motor 82 for drive purposes.

The tracks 152 and 117 of the cam 94, together with their respective levers 154 and 119, are phased in a reciprocal manner, so that the pins 156 and 118 on levers 154 and 119 move together in a radial direction in relation to the axis of the cam 94. More precisely, they are simultaneous engaged with the inner end parts of the respective tracks 152 and 117, and similarly, engage together with the end outer parts of said tracks.

Both the tracks 152 and 117 extend over two revolutions approximately, each providing for positions in which the pins 156 and 118 on respective levers 154 and 119 come to rest, when the base unit 54 has to carry out a specific phase or cycle included within a general operational program, governing the peripheral unit according to the invention. In the tracks 152 and 117, said rest positions are reached by respective pins 156 and 118 by means of the rotation of the motor 87 by a given number of steps, driving the cam 94 from the position associated with a phase of the general operational program, to the associated position in the next phase.

The track inner bottom position "i" of the track 152 is associated with a track bottom position "f'" of track the 117. With the pins 156 and 118 for the levers 154 and 119 engaged in positions "i" and "f'" respectively, the following scenario is obtained: the print head 89 is in maximum high position related to the back-up piece 107, the alignment arrangement 81 is connected with the movement mechanism 79, and the counter-rollers 136 are departed from the rollers 133.

The track 117 for the track bottom position f', comprises a segment f'-e' concentric with the axis of the cam 94 and greater than that of segment g-f for the track 152. When the pin 156 for the lever 154 is engaged with the segment g-f of track 152, the following situation occurs: the print head 89 is in maximum high position, the arrangement 81 disengaged and the counter-rollers 136 are pressing with a light load on rollers 133.

Segment e-d of the track 152 corresponds to a stretch on the track 117 close to segment e'-f'. Positioning of the cam 94 to engage said segments generates the following situation: the print head 89 is positioned at an intermediate height, the arrangement 81 is disengaged and the counter-rollers 136 are pressed under heavy load against the rollers 133.

The positioning of the various kinetic items representing engagement of segment a-b of the track 152 involves the following situation: the arrangement 81 is disengaged and the counter-rollers 136 are pressed under light load against the rollers 133.

A circular segment d'-c' is located on the track 117 corresponding with a given height of a few millimetres of the print head 89 related to the back-up piece 107, so as to avoid contact with the documents 61.

The segment d'-c' of the track 117 follows a stretch c'-b' comprised between positions "c"' and "b"', for the checking phase, as already previously described. The segment c'-b' is associated at each step with a corresponding and proportional movement of the print head 89 in relation to the back-up piece 107. The track 117 finally finishes with a circular segment b'-a' The final stretch of segment c'-b' and segment b'-a' would bring the print head 89 below the back-up piece 107 to approx. 1 mm, if the print head 89 should never go in contact during the checking phase. In practice the latter stretches are never used in engagement with the pin 118 on the lever 119.

A sensor 168 also forms part of the alignment mechanism 81, detecting the edge of the document in the various phases of the alignment cycle and sending control signals to the control unit 76. In particular, the signals sent by the sensor 168 serve to the unit 76 to establish when the documents 61 have been correctly aligned, to disengage the arrangement 81 by means of the coupling 151. On completing alignment of the documents 61, the unit 76 moves the cam 94 anti-clockwise into the rest position as in Figure 7, whereby the crank 159 goes into its lower position, consequently lowering the alignement cross-members 162 below the path 67 and opening the coupling 151 on lever 163.

The coupling 96 in the assembly 86 (Figure 5a) is mounted coaxially with the shaft 139 and has a driven part or flange 169 which, when the coupling is open, is free on shaft 139, and an intermediate part or collar 171 fixed against torsion on the shaft 139 and able to move axially in relation to it. The flange 169 is integral with a toothed pulley 172 and comprises a toothed surface 173. The collar 171 has a toothed surface 174 able to mesh with the toothed surface 173 of the flange 169, whilst a spring 176 acting axially on the collar 171 tends to push the surface 174 against the surface 173.

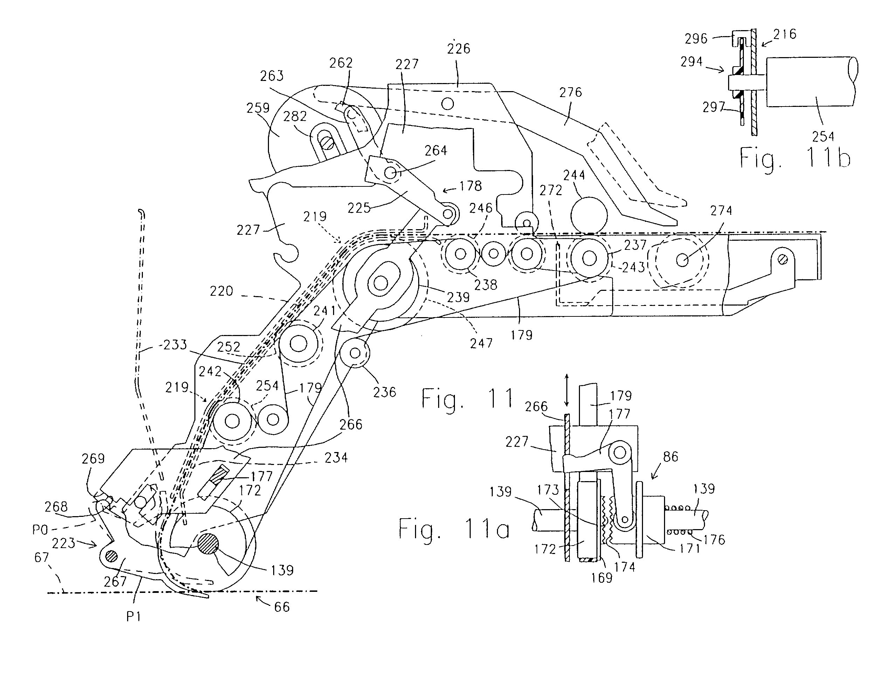

The collar 171 is actuated axially by a crank lever 177, belonging to a selector mechanism 178 (Figure 11a) of the cheque unit 56 and described further on, by means of a roller rotatably mounted on an end of the said lever 177. When in use, the roller turns on the collar 171, when it turns jointly with the shaft 139, during activation of the movement mechanism 79. The toothed pulley 172 provides the movement to the cheque unit 56, by means of a toothed belt 179, coupling with a number of kinetic units of the unit 56, when the latter is located on the base unit 54.

The coupling 96 in the assembly 86 is only fully operative after placing the cheque unit 56 on the base unit 54. This ensures synchronisation of the mechanisms of both units 54 and 56, and saves the use of a specific motor for moving the cheque unit 56, with advantages in the cost of the peripheral 51.

The control unit 76 is connected to outer processing units, for instance a work station 181 (Figure 20), by way of a serial or SCSI type line 182. The work station 181 can operate locally or be connected to a central computer (host) 183. The control programs for operation of the base unit 54 communicate with it by way of signals circulating together with signals from the unit 54 along the line 182, and may reside in the work station 181 or in the computer 183. The line 182, the work station 181 and the same peripheral unit 51 may be considered as components of a communication network 184, usually in service in banking or similar administration environments, wherein it is possible to transmit and receive data through relevant components and having terminals at the till counters.

Resident programs in the work stations 181 are interpreted by other programs residing in the EPROM type memories 146 of the control unit 76, to generate actuation commands for the various parts of the unit 54.

### DOCUMENT READER

The document reader 88 is of a known type, and comprises opto-electronic sensors located in an oblong housing extending transversely and above the path 67. In the unit 56, downstream from the pair of rollers 132-134 and in front of the reader 88, a rubberized roller 186 is comprised, which is rotated by a belt 187, in turn driven by the pulley 127. The roller 186 can be brought from a rest position P2 into a working position P3 (Figures 7 and 8).

In the rest position P2 shown by the continuous line in Figure 8a, the roller 186 is at a distance from reader 88, this position P2 being for when the documents 61 which pass along the path 67 are not intended to be read by the reader 88. In the working position P3 as shown by the broken and dotted line in Figure 8a, the roller 186 is brought close to the reader 88 to guide and advance document 61 before reader 88. The position P3 is intended for the documents 61 to be read by the reader 88 as they transit along the path 67. Two guide profiles 188 and 189, part of the document-guide means 66, are located on both sides of the roller 186 and are opposed to each other. The profiles 188 and 189 on one side are hinged at the ends of the roller 186, and on the other side lean against the structure 63.

The profile 188 is held in the bearing position against the cross-piece member 102 by tension springs which allow the profile 188 to yield flexibly. In this way the profile 188 is ready to adapt the distance between adjacent non-yielding components, according to the thickness of the document 61 or pass books which move above it. In addition the profile 188 bears, by means of springs, a series of free counter rollers 191, able to cooperate with sleeves 192. The elastically deformed springs ensure that the pairs 191-192, consisting of rollers 191 and sleeves 192, remain permanently in contact with each other while the profile 188 moves with the roller 186. This ensures that in any position of the roller 186, the pairs 191-192 are in contact and consequently able to pinch and move forward the documents 61.

On the side opposing the roller 186, the profile 188 bears upon the back-up piece 107 by means of a yielding profile, preferably made of rubber, able to allow limited rotations about it of the profile 189. In that way the profiles 188 and 189 move with the roller 186 during the travel between the two positions P2 and P3, thereby contributing with the roller 186 to define the height of the document passage zone beneath the reader 88.

When the document 61 is not read and the roller 186 is located in the position P2, the reader/roller distance is approx. 3 mm and easily allows thicker documents to pass. The reader 88 is located a little higher than the stretch of path 67 going from the aperture 71 to the pair 132-134. This arrangement is particularly suitable to allow the documents 61 not intended for reading, to easily enter the passage beneath the reader 88 and move forward unimpeded. The guide-means 66 define a stretch with a slight upward slope of the path 67 between the pairs 132-134 and 191-192.

In the position P3 the reader 88 forms together with the roller 186 a gap or minimum slit of a few tenths of a millimetre. In this way, in the absence of document, this avoids the roller 186 sweeping across the reader 88 leaving rubber residue harmful to efficiency of the reader 88.

If the document 61 is for reading, being for instance a bank pass book, its thickness will be greater than the few tenths of a millimetre of the slit quoted above, and provision is made for the reader-roller slit to part automatically to allow the document 61 to pass before the reader 88 and to be read. To do this, the document 61, entering the gap between the reader 88 and the roller 186, induces an adjustment of the gap height to the required thickness causing a corresponding movement of the roller 186 from its position at P3. In effect the roller 186 is able to move flexibly on its own, overcoming the effect of a spring 193. In this way the distance between the reader 88 and the roller 186 is adjusted to the pass book thickness, thereby allowing the transit and reading of the pass book without difficulty.

The movement of the roller 186 from the position P2 to the position P3 or vice versa is obtained with the cursor 153, and the position P3 represents the rest position for the cam 94, with segment g-f engaged with the cam follower lever 154.

In particular the cursor 153 has a profile 194 enabling the guiding of rotation of a lever 196 integral with a transverse shaft 195, operating as a fulcrum and fixed to rotate from the side walls 97 and 98 of the base unit 54. In addition each end of the roller 186 is rotatably connected with corresponding cranks integral with the shaft 195. Finally the lever 196 is constantly in a following relation with the profile 194 through the action of the spring 193 which pushes the lever 196 towards the profile 194.

With reference to Figure 7, when the pin 156 on the lever 154 goes from positions "g" and "f" on the track 152, the cursor 153 moves towards a given intermediate position and the lever 196 is correspondingly brought into contact with one of its rollers with a depression in the lower zone of the profile 194. This acts in such a way that the lever 196 rotates clockwise downwards and consequently the roller 186 is brought close to the reader 88 in the position P3.

Viceversa, to move the roller 186 away from the position P3 and bring it into the rest position P2, it suffices for the cam 94 to rotate in one or the other direction to make the pin 156 on the lever 154 slide out of portion g-f of the track 152 and the adjacent connecting stretches, so that the lever 196, rotating anti-clockwise, climbs up one of the edges of the depression of the profile 194 and travels into one of the flat zones of that profile.

In the mobile structure 65, downstream from the area intended for the reader 88, a shaft 197 is located parallel to the shaft 139 supporting the raised rubberized sleeves 192, previously introduced. The shaft 197 is mounted so as to rotate on the side walls 99 and 101 of the structure 65 and is driven by a belt 198 which in turn is driven by a toothed pulley 199 keyed on the shaft 139.

The pairs 191-192 represent catching means for the documents 61 along the path 67, in the stretch between the rows of pairs of rollers 132-134 and 141-142. This allows control and forwarding of the documents 61 of a length shorter than the distance between the pairs 132-134 and 141-142. More precisely, such documents can for instance be of the type of banking forms or sheets and cheques originating from the cheque unit 56.

In association with the reader 88, the unit 54 also bears a control board 201 (OCR board) for optical recognition of characters and codes printed on the documents 61, after the reader 88 has ensured electronic acquisition of the the documents 61.

The document reader 88 acquires the image of the document 61 or part thereof and then transmits said image to the control unit 76. The image in digitalized form is sent to the external work station 181 for processing and/or filing according to suitable image processing programs.

In addition the image acquired by the reader 88 can be used internally within the peripheral unit 51 by the OCR board 201 to optically recognize characters and codes printed on the documents 61.

During acquisition of its image, the document 61 is advanced by the mechanism 71 across the reader 88 and, as previously described, the rotating roller 186 is effectively brought closer to the reader 88 in the position P3. The roller 186 cooperates there with the mechanism 79 and with the profiles 188 and 189 to advance the document 61 and simultaneously keep the document 61 perfectly adjacent to the reader 88 to allow perfect scanning of the image of the document 61.

The automatic document feeder 57 for the documents 61 is mounted externally to the base unit 54, particularly beneath the housing 64 of the base unit 54, for which the feeder 57 serves as base.

### OPERATION OF THE BASE UNIT

After switching-on the base unit 54, or following a "reset" signal, the unit 54 completes a zeroing or initialisation cycle. In a first phase the unit 76 ensures expulsion of eventual documents present in the base unit 54, resting on the back-up piece 107 or in adjacent zones. For that purpose, the motor 82 moves the drive mechanism 79 for a programmed period of time in the direction of document expulsion, until the sensor 186, previously covered by the document 61, is uncovered.

Initialisation of the checking arrangement 84 is then carried out with actuation of the motor 87 (Figure 9), with an anti-clockwise rotation of the cam 94 until the detector arrangement 122 signals a relative rotation between the framework 113 and the lever 119, indicating that the roller 114 is pressing against the back-up piece 107. The motor 87 is then stopped and reactivated for a clockwise rotation of the cam 94, until the bottom of the tracks 152 and 117 is reached by the pins 156 and 118 on the levers 154 ad 119, as well as the maximum height is reached by the print head 89.

The control unit 76 finally rotates the motor 87 until the pin 118 on the lever 119 engages the circular portion e'-f' of the track 117, with which the rest position of the print head 89 is associated, as pointed out previously.

The control unit 76 then activates the drive motor 92 to move the print head 89 horizontally into a predetermined rest position. Said position is signalled to the control unit 76 by the transition of a signal emitted by a position sensor, of a type known in the art.

At the end of the zeroing cycle, the print head 89 is in the rest position both vertically and horizontally, the roller 186 is close to the optional reader 88, the alignment arrangement 81 is in the inactive configuration and the peripheral unit 51 is ready to receive the instructions from a functional application program.

It is presumed that the document 61 is introduced manually into the base unit 54 through the aperture 71. A "document" program for generic document processing already controls the unit 54, or the till counter employee, actuating the console 78, instructs the external work station 181 to activate the "document" program, placing the unit 54 under the control of the said "document" program.

The presence of the document 61 on the support surface 104 is confirmed by the sensor 168, which sends a corresponding signal of document presence to the control unit 76. Automatically the unit 76 actuates in sequence the drive step-motor 87 and the motor 82 actuating the alignment arrangement 81, so that the document 61 passes through the aperture 71 and is then aligned in relation to the reference points. For that purpose the control unit 76 by means of the motor 87 ensures a clockwise rotation of the cam 94 so as to take the pin 156 on the lever 154 into engagement with a position on the track 152 located in stretch i-h of minimum lift.

The cursor 153 is completely moved to the right taking the crank 159 into its maximum lift position and causes the consequent closure of coupling 151. Subsequent actuation of motor 82 then triggers the alignment arrangement 81 and the movement mechanism 79.

The document 61 is aligned according to a known functional cycle, described in the European patent application No. 448 257 already quoted, in the name of the Applicant. The control unit 76 then once more actuates the motor 87 for the checking cycle of the checking arrangement 84 to determine the thickness of the document 61 and positions the print head 89 at a reference distance from the printing area 93 of the document 61.

Subsequently the document 61 is positioned so that its first line to be printed is located exactly beneath the print head 89. For that purpose the movement mechanism 79 advances the document 61 by a suitable number of steps. After the printing of the first line, the document 61 can be advanced by one or several line spacings by means of the mechanism 79 for printing a further line.

After printing, the document 61 can again be taken forward for reading by the reader 88, while the roller 186 is taken into the position P3 together with the profiles 188 and 189. On completion of the reading, the roller 186 is taken towards the rest position P2.

Finally the document 61 is expelled from the base unit 54 through the aperture 71 and released on to the support surface 104. Or, in case the base module 54 is fitted with the document assembler 58, the document 61 can be transferred to the said assembly 58 which ensures its selective transfer to a station where it can then be manually removed.

In the case of a "pass book" program selection, after introduction through the aperture 71, a pass book 202 is only aligned by the arrangement 81, but the thickness is not detected by the arrangement 84 and the print head 89 remains raised with respect to the feed path 67.

During that phase, magnetic strips eventually located on the cover of the pass book 202 are read and recorded. The information thus received is transmitted to the work station 181 which, on the basis thereof, triggers the various operations of the base unit 54. If printing is also intended, the pass book 202 is advanced and located with a line to be printed opposite the print head 89. The print head 89 then go down until the roller 114 touches the pass book 202, stopping at a predetermined distance from the pass book 202 suitable for printing. The print head 89 then moves transversely along the pass book 202 to print, continuing to contacting it by means of the roller 114.

During printing, the print head 89 is maintained at a constant distance from the pass book 202 and at the same time is able to follow any variations in thickness, by means of the roller 114. The rocker framework 113 can be actuated by the checking arrangement 84 during that printing phase, to impart vertical movements to the print head 89 so as to slip over any centre seams of the pass book 202.

The pass book 202 can be subsequently read by the reader 88, following the same operating conditions applied to generic documents 61. Finally the pass book 202 is expelled from the base unit 54 through the aperture 71.

### ACCESSORY ARRANGEMENTS

The base unit 54 is pre-arranged both mechanically and electronically to admit optional fitting inside of other accessories, in addition to the reader 88, such as a magnetic strip on the documents 61 recording/reading unit 203 or 204 and a magnetic cards reader 206.

The unit 203 ensures reading/recording of horizontal magnetic strips, i.e. perpendicularly to the advance movement of the documents 61. Alternatively, the unit 204 provides for reading/recording of vertical magnetic strips, i.e. in the same direction as the document 61 advance.

The magnetic cards reader 206 is designed to read magnetic cards 207 and is fitted with an insertion aperture adjacent to the front aperture 71.

The unit 203 records (or writes) codes for identification of the owner of the document or information relating to the last operation carried out by the peripheral unit 51 on the document 61. It is fitted to the structure 63 and comprises a magnetic head 208, flexibly mounted on a moving carriage 209 sliding on guides 211 beneath the path 67.

A motor 212 by means of a connecting belt not shown in the drawings, moves the carriage 209 and consequently the head 208 transversely to the path 67. The carriage 209, as it moves from the rest position, lowers a normally raised shutter 213, and uncovers a transverse slit through which the head 208 is pushed by suitable flexible means with which it is secured to the carriage 209.

The head 208 stops on the document 61 which is on the path 67, and sweeps over the relevant surface of the magnetic strip to be read. In the present version the head 208 is able to operate with magnetic strips placed on the surface used by the document to lean against the support surface 104, which for pass-books generally corresponds with the cover.

The unit 204 essentially consists of a magnetic head, mounted on the structure 63 and able to be pushed against the document 61 by corresponding pressure means, to proceed with the reading and recording of magnetic strips belonging to the document 61, which, in the document 61 position along the path 67, are parallel with the advance direction of the said document 61.

The two units 203 and 204 are fitted alternatively to the base unit 54 depending on the position of the magnetic strips in the path 67 as related to the advance movement of the document 61. The arrangement generally always remains identical for operations carried out with the peripheral 51 in a same working environment and it is consequently never necessary to change the initially selected magnetic strip unit. When the base unit 54 is fitted with one of the magnetic readers 203, 204, the document 61 is processed by those units after having been aligned and after detection of the thickness by the arrangement 84.

### CHEQUE UNIT

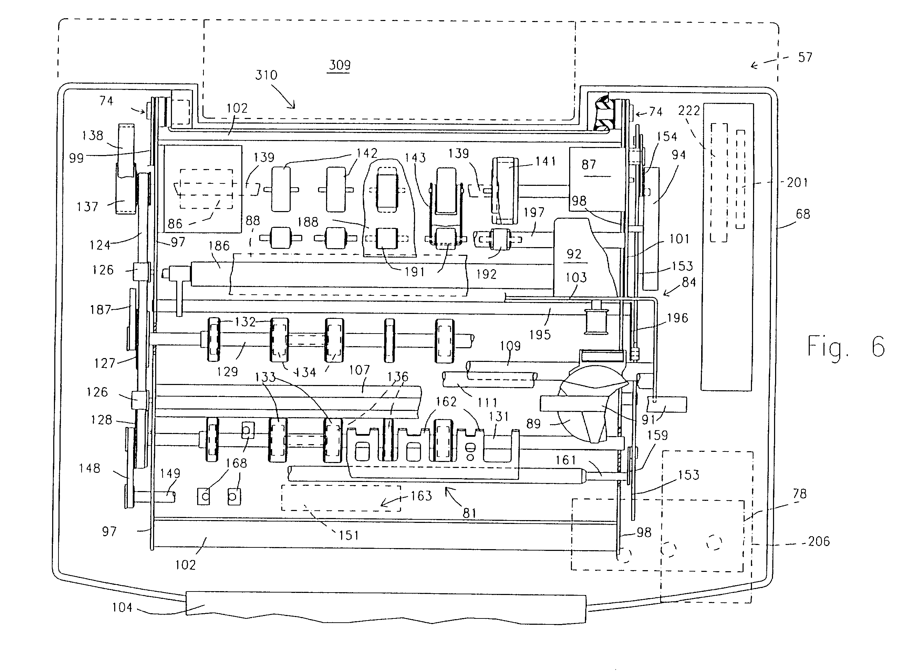

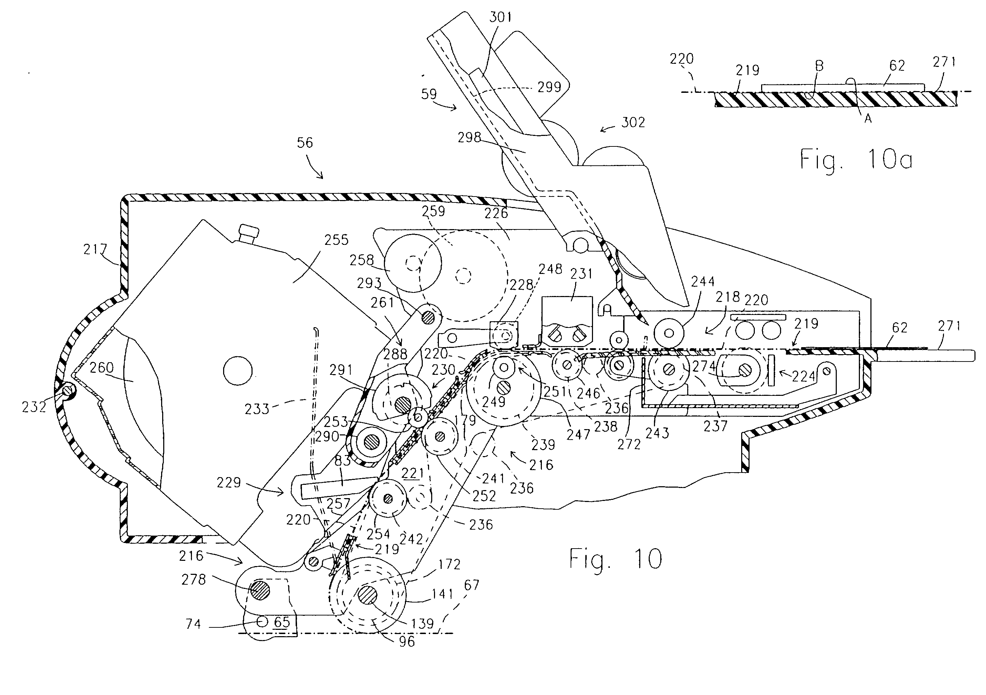

With reference to Figures 10 and 11, the cheque unit 56 comprises a structure 216, a bodywork 217 with an aperture 218, cheque guide means 219, a cheque drive mechanism 221, a selector mechanism 178 and a cheque alignment mechanism 224. The aperture 218 allows introduction of the cheque 62 and the guide means 219 define a cheque path 220. To control the cheque unit 56, a board-type electronic unit 222 (Figure 6) is provided, for connection with the control unit 76 in the base unit 54, and flat flexible cable connections between the unit 76 and the unit 56 not shown in the drawing.

The unit 56 is kinetically coupled to the unit 54 by means of the lever 177 and a toothed belt 179, driving the mechanism 221. There are also selective connection means to be actuated so as to direct the cheque 62 from the path 220 to the path 67 in the base unit 54 and vice versa. In turn, the selector mechanism 178, by means of a lever 225, selectively controls the coupling 96 of the base unit 54, and also simultaneously actuates a connecting means 223, to connect the cheque-guide means 219 with the document guide means 66 of the base unit 54. The selector mechanism 178 also ensures presetting of actuation and driving of the cheque alignment mechanism 224.

The structure 216 has a right flank 226 and a left flank 227 and this can also house optionally a magnetic unit 228 for reading magnetic characters (MICR), a printing unit 229 with electro-thermal head, a stamping unit or cheque stamp 230, and a cheque optical reader 231.

The bodywork 217 is subdivided into two parts, respectively lower and upper, with rear hinges 232, and in which the upper part can be tilted to allow access to the various parts of unit 56 as previously listed.

The cheque-guide means 219 are designed with profiles 234 fixed to the structure 216 and tilting profiles 233 which define an admission port allowing the cheques 62 to pass along the path 220. The profiles 233 and 234 have an essentially horizontal upper part when used, and a downwards sloping part at an angle of approx. 45°. The profiles 233 are tilted upwards to uncover a corresponding inclined portion of the cheque path 220 and to free it from paper jamming areas. The stamping unit 230 is arranged in service above the profiles 233 and the tilting of the profiles 233 must be preceded by a similar tilting operation of the stamping unit 230. Finally the guide means 219 have apertures through which rollers belonging to the cheque transport mechanism 221 are actuated, to advance the cheque 62 along the path 220.

The cheque transport mechanism 221 comprises stressing rollers 236 and toothed pulleys 237, 238, 239, 241 and 242, keyed on the end of the relevant shafts arranged transversely to the path 220 and turning on the flanks 226 and 227 of the structure 216.

The shaft integral with pulley 237 bears two rubber sleeves 243 projecting over its area, of which one only is shown in Figure 10. The sleeves 243 cooperate with corresponding rollers 244 thus forming with them a row of two gripper-pairs 243-244, able to grip and move forward the cheque 62 along the horizontal part of the path 220. Similarly with other gripper-pairs active along the path 220, the two pairs 243-244 are of a size and are distant from each other in such a manner as to control and advance cheques or similar forms, postal orders or coupons, of a width between a minimum of 50 mm and maximum of 105 mm.

The shaft driven by the pulley 238 is integral with a rubber covered lower roller 246, which is also designed to guide the cheque 62 along the horizontal stretch of the path 220. In the event that the cheque unit 56 is fitted with the optional cheque reader 231, the roller 246 is located beneath that reader 231, at a fixed distance of a few tenths of a millimetre. That distance allows the guided passing of the cheque before the reader 231 and being fixed, in the absence of any cheque avoids any contact between the roller 246 and the reader 231, so that the roller 246 on rotating could not deposit rubber residue on its surface, harmful to the reading efficiency.

The shaft integral with the pulley 239 is placed opposite the deviation zone of path 220 located between the horizontal stretch and the downwards sloping stretch. This has two rollers 247 cooperating with corresponding counter rollers 248 to advance and guide with the aid of profiles belonging to the guide means 219 integral with the structure 216, the cheque 62 from the horizontal stretch to the downwards sloping stretch of the path 67.

The two pairs 247-248 define together a space subdivided into an upper part above the path 220 and a lower part beneath the path 220. The upper part is likely to be occupied by the optional magnetic reader 228, whereas the lower part contains a roller 249 belonging to a cheque guide mechanism 251. The roller 249 is free and can be selectively moved along the path 220 to hold the cheque 62 held by the magnetic reader 228 during the reading. The shaft integral with the pulley 241 bears a roller 252 cooperating with two counter-rollers 253, of which one only is shown in Figure 10, to advance the cheque 62 along the sloping stretch of path 220, directly downwards. In a section defined by counter-rollers 253, the roller 252 can operate as a back-up roller for a stamp in the optional stamping unit 230, eventually fitted to unit 56.

Finally the shaft driven by the pulley 242 is integral with a roller 254. When the printing unit 229 is fitted to the unit 56, an electro-thermal print head 256 is designed to bear upon the roller 254 during printing, with the interposition of an inked ribbon 257 for printing magnetic characters on the cheque 62.

The selector mechanism 178 comprises a step motor 258 controlled by unit 222, and a service cam 259 also actuating the cheque guide mechanism 251 and a stamping actuation mechanism 261. The mechanism 251 selectively operates to maintain the cheque against the magnetic head of the unit 228, and the mechanism 261 is designed to selectively control the stamping unit 230.

The service cam 259 will rotate on a pin secured to the right flank 226 of the cheque unit 56 and comprises teeth meshing with a pinion on the step motor 258.

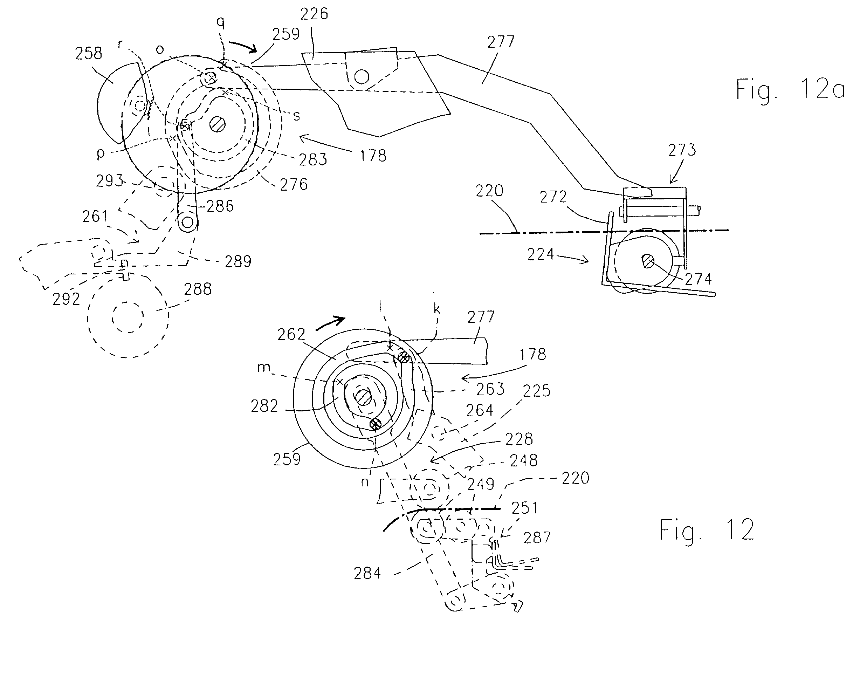

To actuate the coupling 96 and connecting the connecting means 223, the cam 259 comprises a track 262 (Figure 12), by means of which it controls the rocking of an arm 263 secured to one end of a transverse shaft 264. The shaft 264 rotates on the flanks 226 and 227 and controls with the other end, by means of the intermediate lever 225, a slider 266 in turn connecting with the elbow-shaped lever 177, by means of a continuous movement mechanism. In particular when the unit 56 is fitted to the unit 54, the lever 177 engages the collar 171 of the coupling 96, countering the action of the spring 176 (Figure 11a) opening the said coupling 96.

The connecting means 223 comprises a deflector 267, hinged from a transverse shaft and able to rock from a rest position P0 indicated by a broken and dotted line in Figure 11, to a working position P1 shown by a continuous line. In the position P0 the deflector 267 stops the cheque 62 at the end of the cheque path 220. In the position P1 the deflector 267 connects the cheque guide means 219 of unit 56 with the guide means 66 of the base unit 54, to guide the transfer of the cheque 62 from the cheque path 220 to the horizontal path 67 and viceversa.

The deflector 267 comprises in particular a projection 268 which operates in cooperation with a shoulder 269 on the slider 266 of the selector mechanism 178. A recall spring, not shown in the drawings, loads the deflector 267 towards its working position P1 and in the position P0 presses the projection 268 against the shoulder 269. Simultaneously with the closure of the coupling 69, the mechanism 178 pushes the slider 266 upwards, as in Figure 11. The projection 268 follows the shoulder 269 under the effect of the recall spring and the deflector turns clockwise. When the deflector 267 reaches the working position P1, it is stopped in that position by a stop not shown in the drawings on the structure 216. The slider 266 continuous with a short additional stroke upwards releasing the shoulder 269 from the projection 268, but this is without effect on deflector 267 which is held in the connecting position between the guide means 219 and 66.

The alignment mechanism 224 is intended to align the cheques 62 which are manually placed on a cheque introduction surface 271 or coming from the optional cheque introduction unit 59. For that purpose the cheques 62 are held by the mechanism 224 against two references or stops perpendicular to each other, of which the first is integral with the structure 216 and parallel with the flanks 226 and 227, and the second has a transverse cross-member 272, projecting above the path 220 during the alignment phase and repositioning itself beneath it at the end of that phase.
The mechanism 224 is similar to the alignement arrangement 81 fitted to the base unit 54 and described in previously cited European Patent Application No. 448 257 in the name of the Applicant. As for the arrangement 81, the mechanism 224 comprises a coupling 273 (Figure 12a), of known characteristics, selectively connecting a shaft 274 with the drive mechanism 221.

The coupling 273 in this case is actuated selectively by a track 276 on the service cam 259 acting through a lever 277.

Similarly to the arrangement in the aforementioned patent application No. 448 257, the mechanism 224 has three sensors which in the various phases of the alignment cycle, signal the edge of the cheque 62 to the cheque control unit 222 and indicate when the cheque 62 has reached the correct alignment position.

The cheque unit 56 installation on the base unit 54, to define the peripheral units 52 or 53, is effected after removing the upper half-shell 69, securing the structure 216 to the mobile structure 65 by means of suitable references consisting in particular of round cross pieces 278 which are transversely inserted into available holes in the structure 216 or 65. This brings the lever 177 in engagement with the collar 171 of the coupling 96. The mechanism 221 is then connected to the coupling 96, fitting the toothed belt 179 so as to mesh with the toothed pulley 172 of the unit 54 and with the toothed pulleys 237, 238, 239, 241 and 242 of the unit 56. The control unit 222 is finally connected to the control unit 76 of the base unit 54 and the electro-mechanical parts of the unit 56 are connected to the unit 76, by means of suitable cables and connectors.

The bodywork for the unit 52 or 53 is completed by an upper half shell 279, differing from the other half shell 69 to admit the parts of the mechanisms of the unit 56. The half-shell 279 is integrated with the bodywork 217 of the cheque unit 56 and this also comprises a front removable part 281 for access to the unit 83.

The cheque unit 56 does not increase the footprint requirements of the unit 51. It moves in an integral manner with the structure 65, when it is necessary to open the base unit 54 for access to the path 67, for instance to remove any jamming of the documents 61.

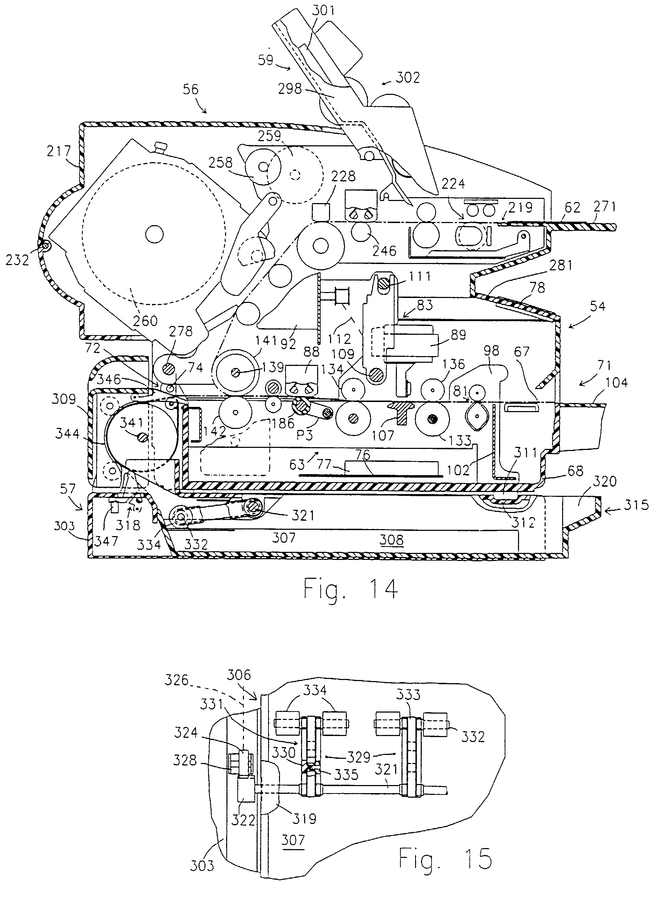

The cheque unit 56 is designed for processing the cheques 62 or similar documents such as coupons, travellers cheques, vouchers and the like each having a front face or face A and a rear face or face B. In particular with regard to the cheques 62 and in accordance with the consolidated methodology in administrations for processing cheques, the face A (Figures 13 and 13a) has a first area 62b, located at the centre of the cheque 62, for receiving a stamp, and a second area 62a located alongside towards an edge of the cheque 62 in the form of a strip, intended to accommodate a string of characters and/or symbols.

The printed stamp in the zone 62b generally serves as identification of the cheque 62. The strip 62a, also known as "code line", describes a number of characteristics, frequently specific, of the cheque 62 to which it belongs, and in the cheque unit 56 it may be printed by a suitable printer, or read if already present on the cheque 62, by means of a suitable reader as described below. In the unit 56, the strip 62a can be printed by means of magnetic ink to obtain MICR characters, recognisable by a suitable magnetic reader. On the face B at the rear an area 62c is provided in which the endorsements made on the cheque 62 are printed.

The cheque 62 is introduced into the unit 56 so that it may be turned upwards with the face A, or turned downwards bearing on the surface 271 with its rear face B (Figure 10a).

The printing unit 229, the stamping unit 230, the magnetic unit 228 and the optical reader 231, where present, operate on the face A of the cheque 62. The passage of cheques 62 from the unit 56 to the unit 54 and vice versa, allows the use of the arrangements in the base unit 54 and/or the optional units located along its path 67, equally for the cheques 62. In particular, the printing unit 83 and the document scanner 88 of the base unit 54 are able to operate on the rear face B of the cheque 62, to print operational data such as the endorsements, and to acquire the image of the face B of the cheque 62.

The drive mechanism 221 is driven by means of the toothed belt 179 from the toothed pulley 172 of the base unit 54, when the pulley 172 is rotated following closure of the coupling 96 and rotation of the shaft 139. Closure of the coupling 96 is controlled by the cheque electronic control unit 222, when the peripheral unit 52 or 53 is in an operational situation adapted for processing the cheques 62, and is achieved by activating the selector mechanism 178, by way of the service cam 259.

In addition to the track 262 and track 276 the service cam 259 has two other tracks 282 and 283 to control respective levers 284 and 286. The track 282 is located on the same side as the cam 259 in which the track 262 is recessed and the lever 284 belongs to the guide mechanism 251, to guide the cheques 62 towards the magnetic unit 228. On the other hand the tracks 276 and 283 are arranged on the opposing side of the cam 259 respectively controlling the lever 277, which triggers the alignment mechanism 224 and the lever 286 which controls the actuation mechanism 261 of the stamping unit 230.

The three tracks 262, 282 and 283 are closed, whereas the track 276 is open and extends around the centre of the cam 259 for practically one revolution.
At the end of the initialisation cycle for the cheque unit 56, the pin on the arm 263 engages with a part l-k of the track 262 located concentrically with the centre of the cam 259, and as other parts of the same type, otherwise described as circular. The part I-k is located between positions "I" and "k" and on the track 262, is located at a maximum radial distance from the centre of the cam 259. When engaged with the pin of the arm 263, the part I-k retains the said arm 263 in a position completely turned upwards, not allowing the triggering of the cheque drive mechanism 221 by the base unit 54 as already explained.

Also in that engaged position, the part I-k is associated with corresponding parts of the other three tracks 282, 276 and 283 when these are in turn engaged with pins of the respective levers 284, 277 and 286.

In greater detail, the part I-k is associated with a circular part m-n of the track 282, defined as positions "m" and "n" and located at a maximum radial distance from the centre of the cam 259. By way of the lever 284 of the mechanism 251 the cam 259 holds the roller 249 pressed against the magnetic unit 228.

Furthermore, the part m-n is associated with a circular part o-p of the track 276, included between positions "o" and "p" and representing the part of the track 276 closest to the centre of the cam 259. By means of the lever 277, the part m-n allows the cheque alignment arrangement 224 to be kept in a triggered mode.

Finally, the part m-n is associated with a circular part r-s of the track 283, comprised with positions "r" and "s" and arranged at a maximum radial distance from the centre of the cam 259. The function of that part r-s, by means of the lever 286 of the mechanism 261 is to keep the stamping unit 230 at rest.

Starting with part I-k, a description is now given of the phasing between the salient parts of the various tracks 262, 282, 276 and 283 when engaged by their relevant pins.

Assuming clockwise rotation of the cam 259, after a short connecting stretch the track 262 takes the arm 263 into a position completely turned downwards allowing the cheque drive means 221 to be driven. At the same time the other tracks 282, 276 and 283 again operate with their circular starting parts and consequently have no effect on the respective mechanisms they control. The existing situation is thus as follows: the mechanism 221 driving, the rollers 249 against the magnetic unit 228, the alignment mechanism 224 triggered and the stamping unit 230 deactivated.

Continuing with the clockwise rotation of the cam 259, the pin on the lever 277 exits from the part o-p of the track 276 and after a short connection stretch, engages with another circular part ending in an end position "q". That part will be at a radial distance from the centre of the cam 259, greater than that of the part o-p, and involves disengagement of the check alignment mechanism 224. The position is thus as follows: the mechanism 221 driving, the rollers 249 pressed against the unit 228, the alignment mechanism 224 disconnected and the stamping unit 230 deactivated.

Continuing the rotation of the cam 259, the track 282 has a circular stretch located at a minimum radial distance from the centre which, by means of the lever 284, detaches the rollers 249 from the magnetic unit 228.

Finally in the latter part of the rotation of the cam 259, the track 283 has a circular part bringing the pin on the lever 286 to the centre of the cam 259 to trigger activation of the stamping unit 230. On completion of the rotation of the cam 259, the pin on the lever 277 stops in the position "q" against an end stop in the track 276.

The control unit 76 operates on the basis of given "cheque operation" program. Starting from the alignment position, by means of the mechanism 221 the control unit 76 advances the cheque 62 along the path 220 for a given distance sufficing for the cheque 62 to reach a subsequent position in which it can interact with one of the arrangements, optional or otherwise, installed in the cheque unit 56. To cover that stretch of the path 220, the unit 76 drives the main step motor 82 by a suitable number of steps. Naturally the same unit 76 can control, just after the alignment or after a first processing on the cheque unit 56, the transfer of the cheque 62 to the base unit 54 for processing by arrangements installed therein.

The guide mechanism 251 is designed to take the pressure roller 249 on to the path 220 and against the magnetic head of the magnetic reading unit 228. In that way the cheque 62 sticks to the head of the unit 228 during the reading of eventual magnetic characters printed on the cheque 62. The roller 249 rotates in freewheeling manner on a rocker frame 287. The lever 284 controlled by the cam 259 moves the frame 287 from a rest position P5 indicated partly in Figure 12, in which the roller 249 is at a distance from the path 220 even though by a few millimetres, on to a working position in which the roller 249 is on the path 220 and presses against the head of the unit 228.

The actuation mechanism 261 for the stamping unit 230 comprises a cyclic coupling 288, of known characteristics, and a lever 289 for controlling the coupling 288. The coupling 288 has a drive part, which is driven by the cheque drive mechanism 221, whereas one of its driven parts moves a stamp 291 from the stamping unit 230. The closing cycle for the coupling 288 is designed to last over one complete revolution, after having been activated by means of the control lever 289. For that purpose the lever 289 is rotated clockwise towards the top (Figure 12a) by the lever 286, which in turn is rotated by the cam 259 until it engages with its pin in the section of the track 283 closest to the centre of the said cam 259.

The clockwise rotation of the lever 289 lifts a control tooth 292, disengaging from the coupling 288. When engaged with the coupling 288, the tooth 292 is designed to maintain the coupling 288 in a resting configuration, according to a known manner, in which its driving part is disconnected from its driven part, and consequently the stamp 291 does not rotate. The lifting of the tooth 292 automatically connects the driving part with the said driven part, and the stamp 291 can start turning.
After starting up rotation of the stamp 291, the cam 259 rotates in the opposite direction to the first and returns the lever 286 so that its pin is engaged with the circular part r-s of the track 283, at a greater distance from the centre of the cam 259. This results in the fact that the lever 289 rotates in the opposing direction to the first, hereby moving downwards, taking the tooth 292 into a position where it can once more assume control of the coupling 288 according to a known feature, to maintain it in the rest configuration previously described. This occurs according to a known manner, simultaneously with the engaging of the tooth 292 with the coupling 288, after the stamp 291 has completed one 360° revolution.

The check unit 56 will admit in a prepared part of the structure 216 located on the side of the station reserved for the optional reading unit 228, a number of other eventual units or arrangements which may concern processing of the cheque 62 and in particular units to recognise if the cheque 62 has been tampered with or otherwise for counterfeiting.

### OPERATION OF THE CHEQUE UNIT

The operation of the cheque unit 54 is determined by a "cheque" programme, which may already be operational on its own account under the control of external units, or may be activated following an operation by the operative from the console 78.

The cheque unit 56 is initialised in a similar manner to that described with reference to the base unit 54. At the end of that phase, the cheque unit 56 finds itself in a resting configuration, conforming with a position of the cam 259 shown in Figure 12 and previously described. The cheque electronic control unit 222 controls and is ready to process a signal emitted by sensors belonging to the cheque alignment mechanism 224, intended to notify the presence of the cheques 62 to be aligned on entry. In consequence the step motor 258 is driven by a given number of steps so as to rotate the cam 259 (Figure 12) clockwise until it reaches a position in which the pin on the arm 263 is engaged with the circular part of the track 262, closer to the centre of the cam 259. This causes anti- clockwise rotation of the arm 263 and consequently the lifting of the lever 266 and closing of the coupling 96. The drive mechanism 221 for the cheque unit 56 thus connect with the movement mechanism 79 of the base unit 54 and can thus be driven by the motor 82. The connecting means 223 connect in turn the cheque path 220 with the horizontal path 67.

After manual insertion at the aperture 218, the cheque 62 is immediately aligned by means of the mechanism 224, according to a known functional sequence. The cheque 62 is subsequently transported by the mechanism 221 along the path 220, to successively reach the various corresponding positions of the different units. The cheque 62 is then processed by the relevant arrangements, according to the specific order of the "cheque" program.

The cheque 62 during its transit along the path 220, may be processed according to any given combination and succession of the following processing modes which may be: reading by the optical scanner reader 231, reading of magnetic characters by magnetic unit 228, stamping by the stamp 291 and printing of magnetic characters by the magnetic printing unit 229.

The cheque 62 can pass from the cheque unit 56 to the base unit 54 for processing by arrangements installed therein. Where in particular it is provided for printing by the head 89 on the back of the cheque 62 (face B), for instance for an endorsement, the cheque 62 is first tested for thickness by the arrangement 84 then printed by the print head 89.

The cheque 62 can re-enter the cheque unit 56 to undergo under processing and return to the base unit 54 and so on, always in accordance with orders imparted by the "cheque" program.

The nature of processing managed by the said "cheque" programme can be widely varying and is not subject to specific limitations. This characteristic is particularly advantageous since it allows the much more versatile management of the cheque 62 within the peripheral unit 52 or 53. At the end of processing, the cheque 62 can be released by the peripheral unit 52 or 53, or to the same introduction surface 271 or the support surface 104 in the base unit 54 or one of the connections of the document assembler 58.

When processing the cheque 62, the peripheral unit 52 or 53 is able to complete a global test or throughput cycle in approx. 4 seconds. That cycle is the sum of all operations which can be undertaken on the cheque 62 after its insertion into the cheque unit 56, i.e. alignment with the alignment mechanism 224, reading of the code line 62a by the magnetic unit 228 and its interpretation by OCR board 201, printing of the code line 62a with the printing unit 229, stamping with the unit 230, transfer of the cheque to the base unit 54 and endorsement by way of the printing unit 83, microfilming and acquisition of image of face B or face A of the cheque 62 by means of the readers 88 and 231 respectively, and finally expulsion or release of the cheque 62 on to the introduction surface 271 or support surface 104 the of base unit 54.

### OPTIONAL ARRANGEMENTS FOR THE CHEQUE UNIT

The cheque reader 231 (scanner) is essentially the same as the magnetic unit 88 on the base unit 54, and is therefore not described in detail. Mounted transversely on the structure 216, it allows reading of the cheque 62, up to a maximum size corresponding with A6 format.

The reader 231 acquires the image of the cheque 62 for various purposes, for instance to transmit it to the external work station 181, or to allow its internal administration by the peripheral unit 51, by means of the OCR board 201, for the purpose of recognising optical characters printed on the cheque 62.

The reader 231 is mounted on the cheque unit 56 in such a way as to define with the lower roller 246 a constant gap or slit of a few tenths of millimetre allowing the cheque 62 to pass through and at the same time maintaining optimum conditions in relation to the reader 231 for satisfactory reading.

The unit 228 for reading MICR characters is designed with a known characteristics sensitive component, intended to acquire signals from magnetic characters belonging to the "code line" 62a, for the purpose of identification. The unit 228 is fixed and is mounted on the structure 216 so as to be perfectly in line with the "code line" 62a to read, and consequently to be located exactly above it during transit of the cheque 62. As is well known, the "code line" 62a is parallel to and adjacent with a longitudinal edge of the cheque 62. The unit 228 is actuated by the electronic unit 222 which simultaneously ensures the imposition thereupon of the pressure roller 249.

The stamping unit 230, of known type, is intended to stamp the cheque 62 and is actuated by the electronic unit 222. In the unit 230, the stamp 291 is fixed in a removable manner and comprises a cylindrical surface section inked by an adjacent inking roller 290 and a milled section which is not inked, which does not come into contact with the cheque 62.

Actuation of the coupling 288 by means of the control lever 289, ensures rotation by one revolution of the stamp 291. During a fraction of that revolution, it comes into contact with the area 62b of the cheque 62 by way of its inked surface and consequently stamps it. At the end of the said revolution the stamp 291 stops in a position in which its milled part faces the path 220, to prevent impeding the transit of the cheque 62. Finally the stamping unit 230 is rotated upwards about a fulcrum 293 of the structure 216 to allow access and to inspect the path 220.

The printing unit MICR 229 is designed to print on face A of the cheque 62 the magnetic "code line" 62a, consisting of MICR characters. The printing head 256 is of the electro-thermal type (ETR), and the inked ribbon 257 of thermal type unrolls from a coil 260 contained in a cartridge 255. Magnetic ink is deposited on the ribbon 257. Means for driving the head 256 in relation to the roller 254 and advancing the ribbon 257 are of known type, and ensure the various movements of the print head 256 and of the ribbon 257 as required for printing. Consequently they have not been shown or described here since they are extraneous to the present invention.

During the writing phase the print head 256 moves initially towards the contrast roller 254 of the mechanism 221, against the cheque 62 which is drawn by it. Consequently the inked ribbon 257 which is between the cheque 62 and the head 256 is pressed with its inked face against the cheque 62 and at that stage the printing is triggered on the cheque 62, sending writing impulses to the head 256.

The writing impulses are managed by the control unit 76 and are synchronised with impulses provided by an angular increment transductor (encoder) 294 (Figure 9) of known type, allowing very closely grouped angular increments. The encoder 294 may include an optical unit 296 secured to the structure 216, able to generate impulses when intercepted by marks located on the periphery of a disk 297 integral with the roller 254, and located according to an extremely fine constant angular pitch.

From the above description it will be clear that the impulses generated by the encoder 294 correspond with angular micro increments of the roller 254, as it rotates, and consequently are indicative of the micrometric movements of the cheque 62 in relation to the fixed head 256, providing that the cheque 62 is drawn by the roller 254 without slipping.

By way of the control unit 76 the synchronisation of printing impulses and impulses generated by the encoder 294 is thus essential, to print the writing dots forming the MICR characters according to an infinitely constant pitch on the cheque 62. In that way this ensures the purpose of precise formation of the MICR codes and characters when printing.

The automatic cheque introduction unit 59 comprises a structure 298 removably connected to the cheque unit 56 and including a cassette 299 wherein a stack 301 of cheques 62 for processing is loaded. The structure 298 houses a mechanism 302 automatically feeding the cheques 62 to the cheque unit 56, of a known type. It is activated by the electronic cheque control unit 222 according to orders issued by the control unit 76 from a "cheque" program, under the control whereof the peripheral unit 52 or 53 is operational. In the unit 56, the cheques 62 are first advanced towards the outer part of surface 271 until they are completely extended on surface 271. They are then recalled in the opposing direction and simultaneously aligned by the mechanism 221. From the description it is clear that the cheques 62 may be in the stack 301 in an imperfectly ordered or aligned form. In effect the mechanism 224 ensures correct alignment of the said cheques 62 coming from the stack 301, before any further processing in the unit 51.

The mechanism 302 is controlled by the electronic control unit 222, for example to block the stack 301 in the cassette 299 after its manual loading by means of known shape pallets not shown here. In this way the user dispenses with manual blocking of the stack 301, or an equivalent operation, after loading the cassette 299, as is normally required in similar feeder arrangements.

### AUTOMATIC DOCUMENT FEEDER

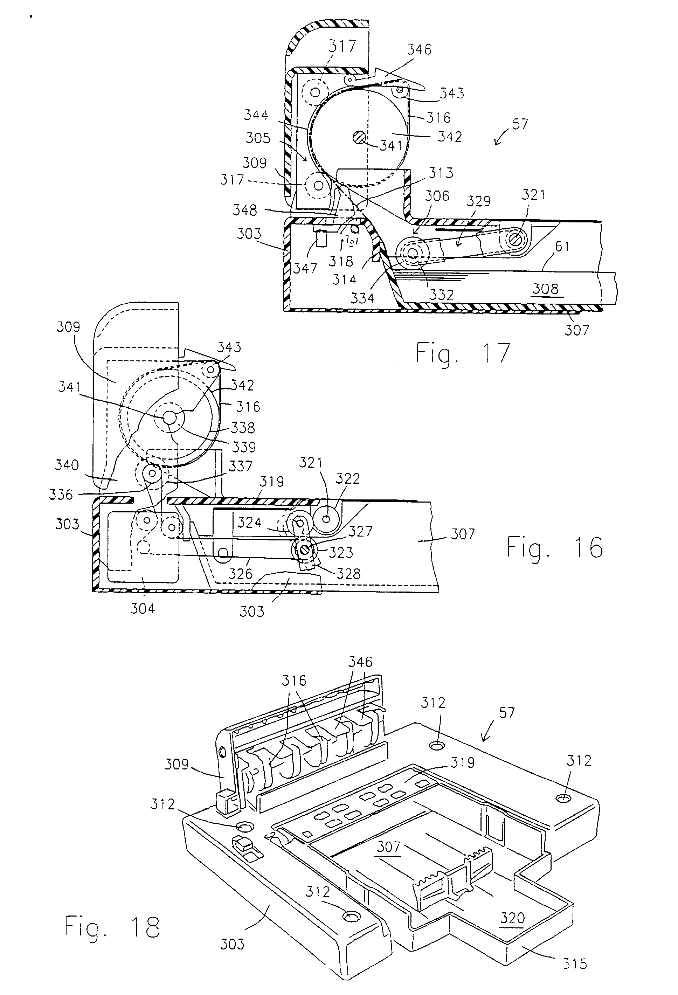

The automatic document feeder 57 (Figure 16) comprises a base 303, a motor 304, a single sheet separator 306 and an advance and guiding arrangement 305. The base 303 has a rectangular footprint of the same width as the base unit 54 and a slightly shallower depth. It has an ample aperture at the top and bottom, designed to receive a removable cassette 307 for a stack of sheets 308 or documents 61. The rear has a cover 309 in the central part of a form raised from the same base 303.

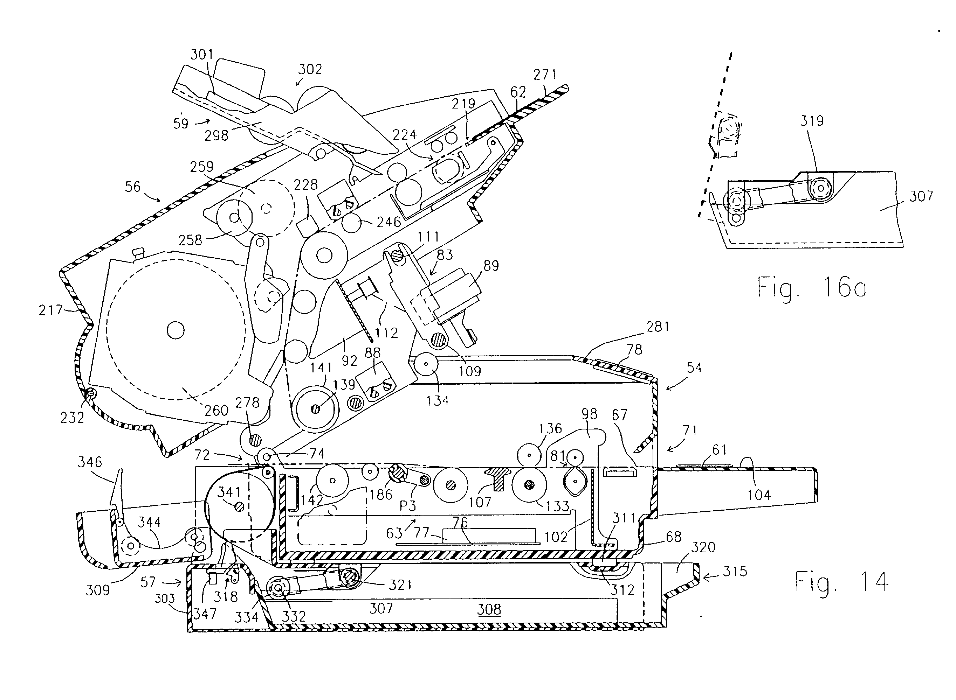

The feeder 57 is designed to support the base-unit 54, so that alignment parts 311 of the base-unit can be inserted into complementary parts 312 of the feeder 57 (Figure 14). In addition when the module 54 is correctly located on the feeder 57, the rear cover 309 lodges in a space 310 provided in the lower half-shell 68 of the unit 54.

When the feeder 57 is correctly fitted beneath the unit 54, the feeder defines an advancing path 313 for the document 61, starting from the rear of the cassette 307 and finishing at the front of the cover 309, in line with the rear aperture 72 of the unit 54.

The single sheet separator 306 collects the topmost document 61 from the stack 308 and advances it towards a first stretch of the path 313. The mechanism 305 advances the document 61 along a second stretch of the path 313 and transfers it through the aperture 72 to the movement mechanism 79 of the base unit 54.

The first part of the path 313 is defined by a rear wall of the cassette 307 suitably inclined to allow optimum separation of the documents 61 and when the cassette 307 is inserted in the feed path 67, connects with a wall 314 of the base 303. The second part of the path 313 is defined by flat belts 316 and rollers 317 mounted inside the cover 309.

Signalling means 318 are also provided to generate an impulse when the document 61 passes from the first to the second stretch of the path 313.

The cassette 307 can be extracted from the base 303 for loading with the stack 308 and subsequent reinsertion to contact the rear wall 314 of the base 303. The cassette 307 has a handle 315 turned towards the user and designed to allow manual collection of the cassette 307 during its extraction and insertion in the base 303. The handle 315 is integral with the cassette 307 and has a central component 320, shaped to project approximately 4-5 centimetres from the cassette 307, and designed to provide at the top an aperture able to conveniently allow manual lifting by the user.

The cassette 307 supports a removable part of the separator 306 comprising a frame 319 allowing manual rotation during the loading of the stack 308 and fitted with a shaft 321 transversely to the stack 308. One end of the shaft 321 projects slightly from the left-hand side of the cassette 307. A gear 322 is keyed on to that end serving as a drive by the fixed part of the separator 306. Housed within the upper left-hand part of the base 303, the separator 306 comprises two gears 323 and 324 meshing together and driven by a belt 326 off the motor 304.

The gear 323 is driven by the belt 326 and will revolve on a pin 327 integral with the base 303. The gear 324 is driven by the gear 323 and is fitted to revolve on a frame 328, hinged on the pin 327 common to the gear 323. The cassette gear 322 is selectively driven by the gear 324, when the said cassette 307 is mounted on the base 303.

The three gears 323, 324 and 322 are arranged in such a manner that the gear 324 is pushed against or drawn away from the gear 322 in relation to the rotation direction of gear the 323 or the rotation direction of the motor 304. The gears 323 and 324, together with the frame 328, effectively form a group of components able to move integrally by way of the interchange of internal forces.

When the gear 323 revolves clockwise, as shown in Figures 16 and 17, the frame 328 and gear 324 tend to follow the gear 323 in its rotation and depart from the rest position illustrated by the broken and dotted line. As a result in the first case the gear 324 meshes with the gear 322 and causes the rotation of the shaft 321. However when the gear 323 revolves anticlockwise, the gear 324 disengages from the gear 322 and no. longer causes the rotation of the shaft 321.

The removable part of the separator 306 also comprises separating groups 329, each in turn with a moving arm 331, hinged to revolve from a first end of the shaft 321 and bearing a revolving shaft 332 at the other end. A belt 333 driven by the shaft 321, in turn actuates the shaft 332 and two rollers 334 integral with the shaft 332 are arranged so as to select the topmost document of the stack 308. The arm 331 consists of two semi-arms 330 and 335 the whole group bearing with its weight upon the stack 308 and defining the necessary document adhesion separating force.

The advance and guiding arrangement 305 is also driven by the belt 326 and comprises a toothed pulley 336 actuated by belt the 326 and integral with a toothed wheel 337, in turn driving by way of a toothed wheel 338 and a free-wheel 339 a shaft 341 revolving on side-brackets fixed to the base 303.

The mechanism also comprises rollers 342 keyed onto the shaft 341 bearing and driving the flat belts 316 wrapped around it. The free-wheel 339 provides a unidirectional motion to the shaft 341 from the wheel 338 and allows the movement mechanism 79 of the unit 54 to freely entrain the document 61 along the avancing path 313.

The belts 316 are under tension from rollers 343 and operate in direct contact with the document 61 to move it along the path 313 with the aid of the pressure rollers 317 divided into two sections, located respectively in the upper part and the lower part of the cover 309. In the present version there are five flat belts 316 to ensure optimum entrainment of the documents 61 along the path 313.

The base unit 54 finally provides a guide profile or compartment 344 intended to guide the document 61 curving it along the path to take it to the document feeder 57, practically at the same level and with the same orientation as the path 67, and a rocking deviator 346. In a first operational situation, the deviator 346 is slightly lifted from the document 61 and during the final stretch of the path 313 guides the documents 61 transferred from the feeder 57 to the base unit 54.

In a second operational situation, the deviator 346 bears by gravity upon components integral with the base 303. In this way it can guide towards the rear aperture 72 the documents 61 processed in the base unit 54 and of greater length which would not fully stretch out along the path 67 and would have to exit from the base-unit 54 through the aperture 72.

In the second operational situation, the deviator 346 can also process generic documents 61 or cheques 62 which by processing necessity would have to pass through a zone of the path 67 in the vicinity of the aperture 72. In that way the deviator 346 prevents the entry into the feeder 57 of the documents 61 interfering with path 313.

The signalling means 318 comprise a lever 348 and an optical sensor 347. The lever 348 is hinged from the base 303, projecting into the path 313 and arranged to be rotated by the document 61 during its advancing motion along the path 313. The optical sensor 347 is masked during rotation of the lever 346 and emits a transition signal when the document 61 pushed by the separator 306, arrives in close proximity to the row of gripper-pairs formed by the belts 316 and rollers 317 located in the lower part of the cover 309.

The documents 61 are placed in the cassette 307 so that the face to be printed is turned downwards. The leading edge of the documents 61 may be arranged, as an alternative, either towards the user or towards the rear part of the cassette 307. The control unit 76 suitably provides for both eventualities of normal or reversed printing. If the documents 61 in the cassette 307 have their leading edge towards the user, they will be printed according to a normal procedure in the base unit. This means that documents from the feeder 57 are advanced completely beyond the print-head 89 then brought backwards by the movement mechanism 79, so as to be presented to the head 89 as if they were arriving from the front aperture 71.

If the documents 61 in the cassette 307, have their leading edge towards the rear of the cassette 307, a special program can be actuated whereby they are printed in reverse form then brought forward, during the line spacing, in the direction from the rear aperture 72 to the front aperture 71. Furthermore, observing the document 61 from the side of the aperture 71, the documents 61 originating from the feeder 57 and printed in the reverse manner, have the rows of characters starting from the right-hand edge.

Operation of the document feeder 57 is as outlined below.

In a first phase the cassette 307 is loaded with the stack 308 of the documents 61, lifting the frame 319 and pushing the stack 308 to the bottom of the cassette 307. The cassette 307 is then placed in the base 303 pushing it against the wall 314. In that way the part of the documents 61 close to the bottom of the cassette is presented to the path 313.

When the electronic control unit 76 triggers the feeding of the document 61 from the feeder 57, the motor 304 first turns in a given direction, for instance clockwise according to Figure 16, engaging the separator 306. The document 61 is thus advanced along the first part of the path 313. Simultaneously, by way of thw free-wheel 339, the wheel 338 turn freely on the shaft 341 thus failing to actuate the advance arrangement 305.

The document 61 arriving close to the row of gripper-pairs formed by the belts 316 and the rollers 317 lower down, activates the signalling means 318. The control unit 76 then allows a given advance of the document 61 during which the leading edge reaches the pairs 316-317 still resting for the moment, thus blocking it and forming a loop. The control unit 76 then reverses the rotation of the motor 304, and disengages the separator 306 and with the free-wheel 339 simultaneously activates the advance arrangement 305 which then stretches the loop formed by the document 61.

In that way the document 61 continues its progress along the second part of the path 313, lifting the deviator 346, finally reaching with the leading part the path 67 in the base-unit 54. When the trailing edge of the document 61 passes signalling means 318, the lever 348 lifts and the optical sensor 347 generates a transition signal, which is recorded by the control unit 76, which, after the signal, again causes the motor 304 to revolve a given number of steps then to stop. This ensures full insertion of the document 61 in the base-unit 54, and controlling by the movement mechanism 79. When in the unit 54, the document 61 is processed by a "document" program similar to that described for the base-unit 54 and relating to the documents 61 inserted through the aperture 71.

As against this procedure, if the document comes from the feeder 57, it is not aligned by the alignement arrangement 81, it being already aligned. As soon as the document 61 arrives under the print-head 89 from an opposing direction to the document 61 from the aperture 71, the printing is effected in the reverse mode; i.e. actuating in a reverse mode to normal the pins or relevant actuators on the print head 89, when printing on the documents 61 coming from the front aperture 71. For that purpose, using the ASIC 147 specialised circuit and the character-generators 144 providing dot outlines of the characters to be printed, the control unit 76 reverses the association of dots for the various characters and pins of the print-head 89 as related to normal pin-actuating means. As an example in the reverse mode, assuming that the print head 89 has 18 pins, the eighteenth pin is actuated as the first one in the normal mode, the seventeenth in the reverse mode as the second one in the normal mode, and so on.

Furthermore, in the reverse mode, the control-unit 76 receives signals emitted by the sensor 110, which moves transversely integrally with the print-head 89, and is designed to signal the presence of the edges of the document 61 on the back-up piece 107. In particular, a signal from the sensor 110 allows the unit 76 to identify a side edge of the document 61 on the back-up piece 107, and consequently, to activate printing of a first character in a row of print, at a predetermined distance from the said edge.

### DOCUMENT OR CHEQUE COLLECTION UNIT

The unit 58 for collecting and separating the documents 61 or the cheques 62 is intended to separate the documents 61 or the cheques 62 at the exit from the peripheral unit 53, and comprises compartments for depositing processed documents and/or cheques. In the unit 53, the unit 58 is located so as to occupy a zone close to the front of lower half-shell 68 and may have a cover with the upper surface 106 in line with the aperture 71. In that case the surface 106 may act as a serving apron for the documents 61 introduced into the unit 53.

### OPERATION OF THE PERIPHERAL UNIT

Operation of the peripheral unit 52 or 53 is as follows below. The peripheral unit 52 or 53 will process single sheets of paper, forms, pass-books, cheques or coupons. The processed documents are subdivided into three classes defined generically as "documents", "pass-books" and "cheques", each having an operational procedure. Each of the three is associated with one or several interacting programs, located partly in the external work station 181 and partly in the EPROM memory 146 of the control unit 76. The said programs are respectively known as programs for "documents", "pass-books" and "cheques", and have already been described individually. Figures 12, 13 and 14 represent in schematic form the function procedures, for the relevant "document", "pass-book" and "cheque" programs.

Before being put under the control of the aforementioned programs, the peripheral unit 52 or 53 is zeroed. Since the unit 52 or 53 may comprise various units as previously described, each having its own zeroing cycle, the overall zeroing of the unit 52 or 53 comprises the zeroing of the various component units in accordance with the timing criteria detailed below. The document collector 58 is always zeroed in the first stage, followed by the document feeder 57, after which comes the zeroing of the service cam 259 of the cheque unit 56 and finally the zeroing of the base-unit 54.

The "document", "pass-books" and "cheques" programs comprise a series of instructions, activated by the control unit 76 to actuate the various arrangements of the peripheral unit 52 or 53. Those programs also provide for auto-control instructions during use, ensuring the correct application to the relevant class of document and or to detect anomalies eventually occurring during operation of the unit 52 or 53. As an example the "document" program in the peripheral unit 52 or 53 is able to determine if instead of a normal document, a pass-book has been inserted, thereby activating a corresponding error signal. The "document", "pass-book" and "cheque" programs comprise instructions for individualised management of the relevant class of document. Such instructions are generally defined according to the till-counter or other working characteristics, to be taken into account by the peripheral unit 52 or 53.

It is clear therefore that the operation as a whole of the peripheral unit 52 or 53, comprises the various functions previously described for optional arrangements or other, as installed, and includes several forms of function managed and programmed by the "document", "pass-book" and "cheque" programs.

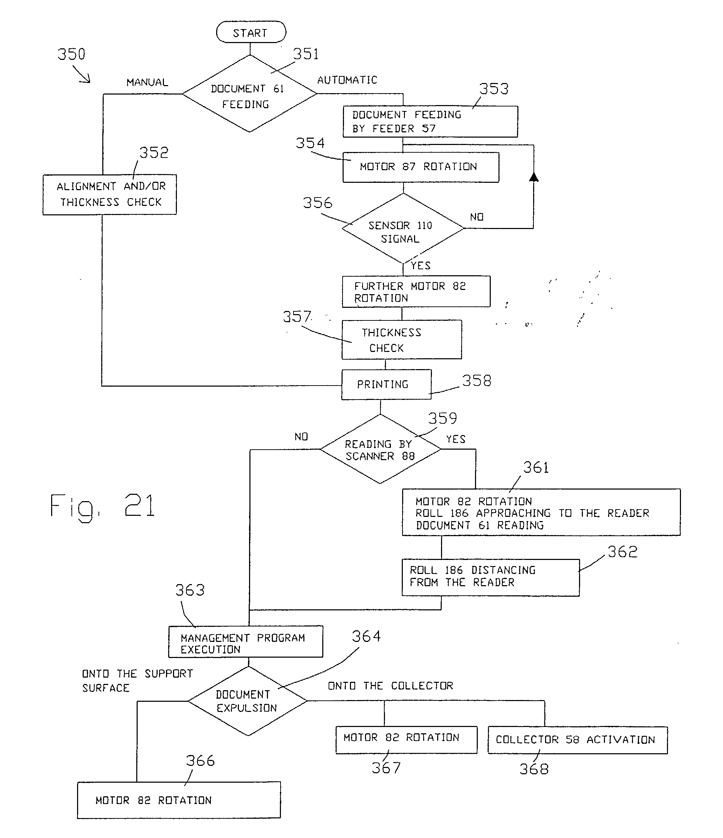

Figure 21 illustrates a typical function mode of the unit 53, according to a programme 350. This ensures by a crosscheck means 351 if the documents 61 are fed manually or automatically by the feeder 57. In the event of the program 350 providing a manual mode, the unit 53 awaits a signal from the sensors 168, indicating the presence of a document on the support surface 104. On receiving the signal, an alignment and/or thickness checking cycle 352 is effected for the document 61. As previously described this provides for alignment and thickness checking for normal documents and only alignment for pass-books.

However if the crosscheck 351 establishes that the document 61 is loaded in by the feeder 57, the control unit 76 orders the execution of an input cycle 353 by the feeder 57, after which the document comes under the control of the movement mechanism 79 of the base-unit 54. Following an operation 354, the step motor 82 rotates by a given number of steps bringing forward the document 61 onto the path 67. The sensor 110 is detected by a crosscheck 356. In the absence of document, the operation 354 is repeated. In the event of a signal for the leading edge of the document 61 passing beneath the print-head 89, the unit 76 brings the document 61 further forward by a given number of steps, for the thickness checking cycle. Then for an operation 357 the document thickness checking procedure is triggered.

Whatever may be the type of feed for the document 61, an operation 358 is subsequently triggered, whereby the document 61 is printed by the print-head 89. After printing, the programme 350 determines as a priority by a crosscheck 359 if the document 61 is intended for reading or other by the reader 88.

In the event of reading, an operation 361 ensures the rotation of the step motor 82 by a given number of steps to pass the document 61 beneath the reader 88, and a roller 186 to the reader 88 approach cycle is executed. On completion of reading with an operation 362, a cycle distancing the roller 186 from the reader 88 is effected.

Should the document not require reading, with an operation 363 the document 61 can be processed on the basis of orders provided by the management program. It is then expelled from the unit 53, or onto the document collector 58, or on the support surface 104 according to a crosscheck 364 by the management programme. If expulsion onto the support surface 104 is required, the motor 82, by an operation 366 will advance in the direction of expulsion the document 61 by a given number of steps sufficing to place it on the support surface 104. If on the other hand expulsion onto the collector 58 is to be ensured, the control unit 76, by an operation 367, will advance the document 61 by a given number of steps, and by way of an operation 368 activate the collector 58 in conjunction therewith. so as to hold it ready to admit the document 61.

It is understood that in its form as previously described the peripheral unit according to invention may be the subject of various modifications, yet without exceeding the scope of the invention.

## Claims

1. Peripheral unit (52,53) for processing documents (61), comprising a document feed path (67) and a document feed mechanism (79) to move said documents along said document feed path (67), characterised in that said peripheral unit comprises a cheque unit (56) having cheque feed path (220) and a cheque feed mechanism (221) to advance cheques (62) along said cheque path, said cheque path being selectively connectable with said document feed path (67) to allow transfer in both directions of said cheques between said document feed path and said cheque feed path (220).

2. Peripheral unit (52,53) according to claim 1, further comprising a base unit (54) having a base area, characterised in that said cheque unit (56) is detachably mounted above said base unit, wherein the footprint of said cheque unit (56) is essentially contained within said base area.

3. Peripheral unit (52,53) according to claim 2, characterised in that it comprises bodywork parts (217) for said cheque unit (56), integrated with complementary parts (279) of a bodywork (64) of said peripheral unit; and a removable cover (281) for access to internal parts of said peripheral unit.

4. Peripheral unit (51) according to claim 2, characterised in that said base unit (54) comprises a bodywork (64) including a lower half-shell (68), and a first upper half-shell (69) engageably mating with said lower half-shell, said first upper half-shell being selectively removable and replaceable by a second upper half-shell (279), said second upper half-shell being integratable with a bodywork (217) of said cheque unit (56).

5. Peripheral unit (51) according to claim 2, in which said base unit comprises a main motor (82) to drive said document feed mechanism, characterised in that said base unit (54) further comprises a presetting assembly (86) for engageably mating with complementary parts of said cheque unit (56), said presetting assembly (86) providing selective connection of said document feed mechanism (79) with said cheque feed mechanism (221), to drive said cheque unit by means of said main motor (82).

6. Peripheral unit according to claim 5, characterised in that said cheque unit (56) comprises a selector mechanism (178) to control said presetting assembly (86), said presetting assembly comprising a coupling (96) with a driving part (169) rotating together with said document mechanism (79), and a driven part (171) designed to drive said cheque drive mechanism (221) and selectively connectable with said driving part by means ofa coupling control lever (177) of said selector mechanism (178).

7. Peripheral unit according to claim 6, characterised in that said cheque unit (56) further comprises moving guide means (223) actuated by said selector mechanism (178), said moving guide means allowing the connection of said cheque feed path (220) with said document path (67), said coupling (96) being closed by said coupling control lever (177), to drive said cheque unit (56), simultaneously with actuation of said moving guide means (223) by said selector mechanism (178).

8. Peripheral unit according to claim 7, characterised in that said moving guide means (223) comprises a deflector (267), and said selector mechanism (178) operates alternately in a rest position, in which said coupling (96) is open and said deflector prevents access to said document feed path (67), and in a working position, in which said coupling (96) is closed and said deflector conveys the cheques (62) from said cheque unit (56) to said base unit (54).

9. Peripheral unit according to claim 6, characterised in that said selector mechanism (178) is controlled by a service cam (259) by way of a service motor (258).

10. Peripheral unit (52, 53) for processing documents (61), comprising a base unit (54) with a horizontal path (67) along which documents (61) are advanced for processing by said base unit, and a document feed mechanism (79) driven by a main motor (82) which advances said documents, characterised in that it further comprises:
a cheque unit (56) for processing cheques (62), said cheque unit being detachably mountable on said base unit (54) and comprising a cheque feed path (220);
a cheque feed mechanism (221) to feed said cheques (62) along said cheque feed path;
a service step-motor (258) designed for incremental rotation in both movement directions;
a selector mechanism (178) for actuating the drive of said cheque unit by means of said main motor (82) ;
an alignment device (224) for cheque alignment;
a cheque stamping unit (230);
a reading unit (231) for reading characters printed on said cheques;
a guide mechanism (219) to guide said cheques to said stamping unit and to said reading unit (231), said stamping unit and said reading unit being designed to operate on the said cheques while they are conveyed along said cheque feed path;
wherein a cam component (259) actuated by said service motor (258) and having a plurality of profiles (262, 276, 282, 283) operates in selective mode in relation to said alignment device (224), to said selector mechanism (178), to said stamping unit (230) and to said guide mechanism (219); and
wherein said alignment device, said selector mechanism, said stamping unit and said guide mechanism are selectively actuatable in reply to said movement directions and to said incremental rotation of said service motor (258).

## Patentansprüche

1. Peripheriegerät (52, 53) zum Verarbeiten von Dokumenten (61), umfassend einen Dokumentvorschubpfad (67) und einen Dokumentvorschubmechanismus (79) zum Bewegen der genannten Dokumente über den genannten Dokumentvorschubpfad (67), dadurch gekennzeichnet, daß das genannte Peripheriegerät eine Scheckeinheit (56) mit einem Scheckvorschubpfad (220) und einem Scheckvorschubmechanismus (221) umfaßt, um die Schecks (62) über den genannten Scheckpfad zu leiten, wobei der genannte Scheckpfad selektiv mit dem genannten Dokumentvorschubpfad (67) verbunden werden kann, um eine Übertragung der genannten Schecks in beiden Richtungen zwischen dem genannten Dokumentvorschubpfad und dem genannten Scheckvorschubpfad (220) zu ermöglichen.

2. Peripheriegerät (52, 53) nach Anspruch 1, ferner umfassend eine Basiseinheit (54) mit einem Basisbereich, dadurch gekennzeichnet, daß die genannte Scheckeinheit (56) lösbar über der genannten Basiseinheit montiert ist, wobei die Stellfläche der genannten Scheckeinheit (56) im wesentlichen in dem genannten Basisbereich enthalten ist.

3. Peripheriegerät (52, 53) nach Anspruch 2, dadurch gekennzeichnet, daß es Gehäuseteile (217) für die genannte Scheckeinheit (56), die in komplementäre Teile (279) eines Gehäuse (64) des genannten Peripheriegerätes integriert sind, und einen entfernbaren Deckel (281) für den Zugang zu Innenteilen des genannten Peripheriegerätes umfaßt.

4. Peripheriegerät (51) nach Anspruch 2, dadurch gekennzeichnet, daß die genannte Basiseinheit (54) ein Gehäuse (64) mit einer unteren Halbschale (68) und einer ersten oberen Halbschale (69) umfaßt, die in die genannte untere Halbschale passend eingreifen kann, wobei die genannte erste obere Halbschale selektiv entfernt und durch eine zweite obere Halbschale (279) ersetzt werden kann, wobei die genannte zweite obere Halbschale in ein Gehäuse (217) der genannten Scheckeinheit (56) integriert werden kann.

5. Peripheriegerät (51) nach Anspruch 2, bei dem die genannte Basiseinheit einen Hauptmotor (82) umfaßt, um den genannten Dokumentvorschubmechanismus anzutreiben, dadurch gekennzeichnet, daß die genannte Basiseinheit (54) ferner eine Voreinstellungsbaugruppe (86) umfaßt, die passend in komplementäre Teile der genannten Scheckeinheit (56) eingreift, wobei die genannte Voreinstellungsbaugruppe (86) eine selektive Verbindung zwischen dem genannten Dokumentvorschubmechanismus (79) und dem genannten Scheckvorschubmechanismus (221) herstellt, um die genannte Scheckeinheit mit Hilfe des genannten Hauptmotors (82) anzutreiben.

6. Peripheriegerät nach Anspruch 5, dadurch gekennzeichnet, daß die genannte Scheckeinheit (56) einen Auswahlmechanismus (178) umfaßt, um die genannte Voreinstellungsbaugruppe (86) zu steuern, wobei die genannte Voreinstellungsbaugruppe eine Kupplung (96) mit einem antreibenden Teil (169), der zusammen mit dem genannten Dokumentmechanismus (79) rotiert, und einem angetriebenen Teil (171) umfaßt, der die Aufgabe hat, den genannten Scheckantriebsmechanismus (221) anzutreiben und der mit Hilfe eines Kupplungsbedienungshebels (177) des genannten Auswahlmechanismus (178) mit dem genannten angetriebenen Teil selektiv verbunden werden kann.

7. Peripheriegerät nach Anspruch 6, dadurch gekennzeichnet, daß die genannte Scheckeinheit (56) ferner ein von dem genannten Auswahlmechanismus (178) betätigtes bewegliches Führungsmittel (223) umfaßt, wobei das genannte bewegliche Führungsmittel die Verbindung zwischen dem Scheckvorschubpfad (220) und dem genannten Dokumentenpfad (67) zuläßt, wobei die genannte Kupplung (96) von dem genannten Kupplungsbedienungshebel (177) geschlossen wird, um die genannte Scheckeinheit (56) gleichzeitig mit der Betätigung des genannten beweglichen Führungsmittels (223) durch den genannten Auswahlmechanismus (178) anzutreiben.

8. Peripheriegerät nach Anspruch 7, dadurch gekennzeichnet, daß das genannte bewegliche Führungsmittel (223) eine Ablenkvorrichtung (267) umfaßt und der genannte Auswahlmechanismus (178) abwechselnd in einer Ruheposition, in der die genannte Kupplung (96) offen ist und die genannte Ablenkvorrichtung den Zugang zu dem genannten Dokumentvorschubpfad (67) verhindert, und in einer Arbeitsposition arbeitet, in der die genannte Kupplung (96) geschlossen ist und die genannte Ablenkvorrichtung die Schecks (62) von der genannten Scheckeinheit (56) zu der genannten Basiseinheit (54) befördert.

9. Peripheriegerät nach Anspruch 6, dadurch gekennzeichnet, daß der genannte Auswahlmechanismus (178) von einer Betriebsnocke (259) über einen Betriebsmotor (258) gesteuert wird.

10. Peripheriegerät (52, 53) zum Bearbeiten von Dokumenten (61), umfassend eine Basiseinheit (54) mit einem horizontalen Pfad (67), über den Dokumente (61) zur Verarbeitung durch die genannte Basiseinheit geführt werden, und einen Dokumentvorschubmechanismus (79), der von einem Hauptmotor (82) angetrieben wird, der die genannten Dokumente vorschiebt, dadurch gekennzeichnet, daß es ferner folgendes umfaßt:
eine Scheckeinheit (56) zum Bearbeiten von Schecks (62), wobei die genannte Scheckeinheit lösbar auf der genannten Basiseinheit (54) montiert werden kann und einen Scheckvorschubpfad (220) aufweist;
einen Scheckvorschubmechanismus (221) zum Vorschieben der genannten Schecks (62) über den genannten Scheckvorschubpfad;
einen Betriebsschrittschaltmotor (258) für eine schrittweise Rotation in beiden Bewegungsrichtungen;
einen Auswahlmechanismus (178) zum Betätigen des Antriebs der genannten Scheckeinheit mit Hilfe des genannten Hauptmotors (82);
eine Ausrichtungsvorrichtung (224) zum Ausrichten der Schecks;
eine Scheckstempeleinheit (230);
eine Leseeinheit (231) zum Lesen von auf den genannten Schecks aufgedruckten Zeichen;
einen Führungsmechanismus (219) zum Führen der genannten Schecks zu der genannten Stempeleinheit und zu der genannten Leseeinheit (231), wobei die genannte Stempeleinheit und die genannte Leseeinheit die Aufgabe haben, die genannten Schecks zu bearbeiten, während diese über den genannten Scheckvorschubpfad befördert werden;
wobei eine Nockenkomponente (259), die von dem genannten Betriebsmotor (258) betätigt wird und eine Mehrzahl von Profilen (262, 276, 282, 283) aufweist, in einem selektiven Modus in bezug auf die genannte Ausrichtungsvorrichtung (224), zu dem genannten Auswahlmechanismus (178), zu der genannten Stempeleinheit (230) und zu dem genannten Führungsmechanismus (219) arbeitet; und
wobei die genannte Ausrichtungsvorrichtung, der genannte Auswahlmechanismus, die genannte Stempeleinheit und der genannte Führungsmechanismus selektiv in Reaktion auf die genannten Bewegungsrichtungen und auf die genannte schrittweise Rotation des genannten Betriebsmotors (258) betätigt werden können.

## Revendications

1. Unité périphérique (52, 53) de traitement de documents (61), comprenant un chemin d'avance de documents (67) et un mécanisme d'avance de documents (79) en vue de déplacer lesdits documents le long dudit chemin d'avance de documents (67), caractérisée en ce que ladite unité périphérique comprend une unité de chèques (56) ayant un chemin d'avance de chèques (220) et un mécanisme d'avance de chèques (221) en vue d'avancer des chèques (62) le long dudit chemin de chèques, ledit chemin de chèques étant sélectivement connectable audit chemin d'avance de documents (67) en vue de permettre le transfert dans les deux sens desdits chèques entre ledit chemin d'avance de documents et ledit chemin d'avance de chèques (220).

2. Unité périphérique (52, 53) selon la revendication 1, comprenant en outre une unité de base (54) ayant une zone de base, caractérisée en ce que ladite unité de chèques (56) est montée de manière amovible au-dessus de ladite unité de base, dans laquelle la surface d'encombrement de ladite unité de chèques (56) est essentiellement contenue à l'intérieur de ladite zone de base.

3. Unité périphérique (52, 53) selon la revendication 2, caractérisée en ce qu'elle comprend des parties de châssis (217) de ladite unité de chèques (56) intégrées à des parties complémentaires (279) d'un châssis (64) de ladite unité périphérique ; et un couvercle amovible (281) permettant d'accéder aux parties internes de ladite unité périphérique.

4. Unité périphérique (51) selon la revendication 2, caractérisée en ce que ladite unité de base (54) comprend un châssis (64) comportant une demi-coque inférieure (68), et une première demi-coque supérieure (69) s'accouplant par engagement avec ladite demi-coque inférieure, ladite première demi-coque supérieure étant sélectivement amovible et remplaçable par une deuxième demi-coque supérieure (279) pouvant être intégrée à un châssis (217) de ladite unité de chèques (56).

5. Unité périphérique (51) selon la revendication 2, dans laquelle ladite unité de base comprend un moteur principal (82) pour entraîner ledit mécanisme d'avance de documents, caractérisée en ce que ladite unité de base (54) comprend en outre un ensemble de préréglage (86) en vue de s'accoupler par engagement avec des parties complémentaires de ladite unité de chèques (56), ledit ensemble de préréglage (86) fournissant une connexion sélective dudit mécanisme d'avance de documents (79) avec ledit mécanisme d'avance de chèques (221), en vue d'entraîner ladite unité de chèques au moyen dudit moteur principal (82).

6. Unité périphérique selon la revendication 5, caractérisée en ce que ladite unité de chèques (56) comprend un mécanisme de sélection (178) en vue de commander l'ensemble de préréglage (86), ledit ensemble de préréglage comprenant un couplage (96) avec une pièce d'entraînement (169) tournant avec ledit mécanisme de documents (79), et une pièce entraînée (171) conçue pour entraîner ledit mécanisme d'entraînement de chèques (221) et sélectivement connectable à ladite pièce d'entraînement au moyen d'un levier de commande de couplage (177) dudit mécanisme de sélection (178).

7. Unité périphérique selon la revendication 6, caractérisée en ce que ladite unité de chèques (56) comprend en outre un moyen de guidage mobile (223) actionné par ledit mécanisme de sélection (178), ledit moyen de guidage mobile permettant le raccordement dudit chemin d'avance de chèques (220) avec ledit chemin de documents (67), ledit couplage (96) étant fermé par ledit levier de commande de couplage (177), en vue d'entraîner ladite unité de chèques (56), simultanément à l'actionnement dudit moyen de guidage mobile (223) par ledit mécanisme de sélection (178).

8. Unité périphérique selon la revendication 7, caractérisée en ce que ledit moyen de guidage mobile (223) comprend un déflecteur (267), et ledit mécanisme de sélection (178) fonctionne en alternance en une position de repos, dans laquelle ledit couplage (96) est ouvert et ledit déflecteur interdit l'accès audit chemin d'avance de documents (67), et en une position de travail, dans laquelle ledit couplage (96) est fermé et ledit déflecteur achemine les chèques (62) depuis ladite unité de chèques (56) jusqu'à ladite unité de base (54).

9. Unité périphérique selon la revendication 6, caractérisée en ce que ledit mécanisme de sélection (178) est commandé par une came de service (259) au moyen d'un moteur de service (258).

10. Unité périphérique (52, 53) de traitement de documents (61), comprenant une unité de base (54) avec un chemin horizontal (67) le long duquel des documents (61) sont avancés en vue d'être traités par ladite unité de base, et un mécanisme d'avance de documents (79) entraîné par un moteur principal (82) qui avance lesdits documents, caractérisée en ce qu'elle comprend en outre :
une unité de chèques (56) pour traiter des chèques (62), ladite unité de chèques étant montable de manière amovible sur ladite unité de base (54) et comprenant un chemin d'avance de chèques (220) ;
un mécanisme d'avance de chèques (221) en vue d'avancer lesdits chèques (62) le long dudit chemin d'avance de chèques ;
un moteur pas-à-pas de service (258) conçu en vue d'une rotation incrémentielle dans les deux sens de déplacement ;
un mécanisme de sélection (178) pour actionner l'entraînement de ladite unité de chèques au moyen dudit moteur principal (82) ;
un dispositif d'alignement (224) en vue de l'alignement des chèques ;
une unité de timbrage de chèques (230) ;
une unité de lecture (231) pour lire les caractères imprimés sur lesdits chèques ;
un mécanisme de guidage (219) en vue de guider lesdits chèques vers ladite unité de timbrage et vers ladite unité de lecture (231), ladite unité de timbrage et ladite unité de lecture étant conçues pour fonctionner sur lesdits chèques pendant qu'ils sont acheminés le long dudit chemin d'avance de chèques ;
dans laquelle un composant de came (259) actionné par ledit moteur de service (258) et ayant une pluralité de profils (262, 276, 282, 283) fonctionne dans un mode sélectif par rapport audit dispositif d'alignement (224), audit mécanisme de sélection (178), à ladite unité de timbrage (230) et audit mécanisme de guidage (219) ; et
dans laquelle ledit dispositif d'alignement, ledit mécanisme de sélection, ladite unité de timbrage et ledit mécanisme de guidage sont sélectivement actionnables en réponse auxdits sens de déplacement et à ladite rotation incrémentielle dudit moteur de service (258).
